# EUROPEAN PATENT APPLICATION

(11) **EP 4 210 289 A1**
(43) Date of publication of application: **12.07.2023**
(21) Application number: 21874225.2
(22) Date of filing: 13.09.2021
(51) Int. Cl.: H04L 43/062

(54) **DEVICE ABNORMALITY MONITORING METHOD AND DEVICE**

(30) Priority: 30.09.2020 CN 202011063323
(71) Applicant: Petal Cloud Technology Co., Ltd., Dongguan, Guangdong 523799 (CN)
(72) Inventor: CHEN, Xiaoyang, Shenzhen, Guangdong 518129 (CN); JI, Zhenfang, Shenzhen, Guangdong 518129 (CN); ZHAO, Wenyuan, Shenzhen, Guangdong 518129 (CN); ZHOU, Hai, Shenzhen, Guangdong 518129 (CN); YANG, Fen, Shenzhen, Guangdong 518129 (CN)
(74) Representative: Maiwald GmbH
(86) International application number: PCT/CN2021/117990
(87) International publication number: WO 2022/068564

(57) **Abstract**

A device anomaly monitoring method and a device. The method may be applied to an Internet of Things system. The Internet of Things system may include an electronic device, an Internet of Things cloud platform, and an Internet of Things device. The Internet of Things device is provided with an anomaly monitoring switch. When the anomaly monitoring switch is enabled, the Internet of Things device may perform anomaly monitoring. An anomaly rule is stored in the Internet of Things device. According to the anomaly rule, the Internet of Things device may determine whether a request sent by the Internet of Things device is an anomaly request and whether a control instruction received from the Internet of Things cloud platform is an anomaly control instruction. When the anomaly request or anomaly control instruction is monitored, the Internet of Things device may discard the anomaly request or the anomaly control instruction. By implementing the method, when an anomaly occurs in the Internet of Things device or the Internet of Things cloud platform, the Internet of Things device and the Internet of Things cloud platform can save software and hardware resources.

## Description

This application claims priority to Chinese Patent Application No. 202011063323.7, filed with the China National Intellectual Property Administration on September 30, 2020 and entitled "DEVICE ANOMALY MONITORING METHOD AND DEVICE", which is incorporated herein by reference in its entirety.

### TECHNICAL FIELD

This application relates to the field of Internet of Things technologies, and in particular, to a device anomaly monitoring method and a device.

### BACKGROUND

With the development of Internet of Things technologies, Internet of Things devices can connect to the network and log in to an Internet of Things cloud platform. Internet of Things devices can report their status messages to the Internet of Things cloud platform. For example, a turn-on state or a turn-off state, and power consumption. A user may view a status message of an Internet of Things device on an electronic device such as a mobile phone or a tablet computer, and control the Internet of Things device. For example, the mobile phone may deliver, to the Internet of Things cloud platform, a control instruction for turning on the Internet of Things device. Further, the Internet of Things cloud platform may send a turn-on control instruction to the Internet of Things device. In response to the turn-on control instruction, the Internet of Things device may be turned on.

However, in an interaction process between the Internet of Things device and the Internet of Things cloud platform, an anomaly may occur in the Internet of Things device or the Internet of Things cloud platform, for example, the Internet of Things device frequently requests to log in to the Internet of Things cloud platform, or the Internet of Things cloud platform frequently delivers a control instruction to the Internet of Things device. These anomalies may waste software and hardware resources of the Internet of Things cloud platform and the Internet of Things device.

### SUMMARY

This application provides a device anomaly monitoring method and a device. The method may be applied to an Internet of Things system. The Internet of Things system may include an Internet of Things cloud platform and an Internet of Things device. The Internet of Things device may perform anomaly monitoring. When detecting that the Internet of Things device frequently sends an anomaly request to the Internet of Things cloud platform, the Internet of Things device may reduce a frequency of sending the anomaly request. When detecting that the Internet of Things cloud platform frequently sends an anomaly control instruction to the Internet of Things device, the Internet of Things device may reduce a frequency of responding to the anomaly request. The method, when an anomaly occurs on the Internet of Things device or the Internet of Things cloud platform, may save software and hardware resources of the Internet of Things device and the Internet of Things cloud platform.

According to a first aspect, this application provides a device anomaly monitoring method. The method includes: A first terminal sends a first message to a server. If the first terminal detects that the first terminal sends the first message to the server for N1 times in a first unit time, and N1 is greater than a first value, the first terminal may reduce a quantity of times of sending the first message to the server in the first unit time. N1 is a positive integer.

Or, the first terminal may receive a second message from the server. If the first terminal detects that the first terminal receives the second message from the server for N2 times in the first unit time, and N2 is greater than a second value, the first terminal may reduce a quantity of times of responding to the second message in the first unit time. N2 is a positive integer.

The first terminal may be the foregoing Internet of Things device. The server may be the foregoing Internet of Things cloud platform.

Based on a device anomaly monitoring method provided in this application, the first terminal may detect whether an anomaly occurs on the first terminal and whether an anomaly occurs on the server. When detecting that the first terminal is abnormal and frequently sends the first message to the server, the first terminal may reduce a frequency of sending the first message. When detecting that an anomaly occurs in the server, and the first terminal frequently receives the second message from the server, the first terminal may reduce a frequency of responding to the second message. In this way, when an anomaly occurs on the first terminal or the server, the first terminal and the server may save software and hardware resources, and reduce a waste of the software and hardware resources.

In a possible implementation, if it is detected that the quantity of times that the first terminal sends the first message to the server is greater than the first value within the first unit time, the first terminal may reduce the quantity of times of sending the first message to the server within the first unit time to be below the first value. The first terminal may store a first anomaly rule. The first anomaly rule may be used for determining whether a behavior of sending the first message by the first terminal is an abnormal behavior. The first anomaly rule may be: If a frequency of sending the first message by the first terminal is higher than 30 times/minute, the behavior of sending the first message is an abnormal behavior. In other words, the first unit time may be one minute. The first value may be 30. Neither the first unit time nor a specific value of the first value is specifically limited in this embodiment of this application.

The first message may include a login request and/or a status message of the first terminal (for example, a turn-on state or a turn-off state of the first terminal, power consumption of the first terminal, and data collected by a sensor configured for the first terminal). Specific content of the first message is not limited in this embodiment of this application.

A method for reducing, by the first terminal, the quantity of times of sending the first message to the server in the first unit time to below the first value may be specifically as follows: The first terminal may record a time at which the first message is sent each time. When the first message is sent for the n-th time, the first terminal may determine whether the quantity of times of sending the first message in one minute before a current moment exceeds 30. If more than 30, the first terminal may determine that the sending the first message for the n-th time is an abnormal behavior. Further, the first terminal may discard the first message that needs to be sent the n-th time. In this way, the first terminal may reduce a frequency of sending the first message to the server, and control the quantity of times of sending the first message in one minute within 30 (namely, the first value).

In the foregoing method, a frequency of the first message that needs to be processed by the first terminal and the server is reduced. In this way, when an anomaly occurs on the first terminal, a waste of the software and hardware resources of the first terminal and the server can be reduced. In addition, the first terminal can still send the first message at a relatively low frequency (that is, lower than a frequency limited in the first anomaly rule). In this way, impact of misjudgment of an abnormal behavior on function implementation of the first terminal can be reduced.

In a possible implementation, if detecting that the quantity of times that the first terminal receives, within the first unit time, the second message sent by the server is greater than the second value, the first terminal may reduce the quantity of times that the first terminal responds to the first message within the first unit time to less than the second value. The first terminal may store a second anomaly rule. The second anomaly rule may be used for determining whether a behavior of sending the second message by the server is an abnormal behavior. The second anomaly rule may be: If the first terminal receives that a frequency of sending the second message by the server is higher than 30 times/minute, the behavior of sending the second message by the server is an abnormal behavior. In other words, the second value may be 30. A specific value of the second value is not limited in this embodiment of this application.

The second message may include indication information of a first task. The first task may include setting a status of the first terminal (for example, turning on the first terminal or turning off the first terminal) and/or sending a status message of the first terminal to the server. Specific content of the second message is not limited in this embodiment of this application.

A method for reducing, by the first terminal, the quantity of times of responding to the first message in the first unit time to below the second value may be specifically as follows: The first terminal may record a time at which the second message is received each time. When the second message is received for the m-th time, the first terminal may determine whether a quantity of times of receiving the second message in one minute before a current moment exceeds 30. If more than 30, the first terminal may determine that the second message received for the m-th time is an abnormal control instruction. Further, the first terminal may discard the second message received for the m-th time, and skip responding. In this way, the first terminal may reduce the frequency of responding to the second message, and control a quantity of times of responding to the second message in one minute to be within 30 (that is, the second value).

In the foregoing method, the first terminal reduces a frequency of responding to a received second message, so that a waste of software and hardware resources of the first terminal can be reduced.

With reference to the first aspect, in some embodiments, setting a status of the first terminal includes one or more of the following: turning on the first terminal and enabling the first terminal to play audio, turning off the first terminal, adjusting volume of the first terminal, switching the audio played by the first terminal, and pausing the audio played by the first terminal.

With reference to the first aspect, in some embodiments, the first value in the first anomaly rule and the second value in the second anomaly rule may be preset by the first terminal before delivery. Alternatively, the first value and the second value may be sent by the server to the first terminal. For example, the server includes a risk control module used to generate an anomaly rule. After the first terminal establishes a communication connection to the server, the server may send, to the first terminal, the anomaly rule (for example, the first anomaly rule or the second anomaly rule) generated by the risk control module. The first terminal may store an anomaly rule, and perform anomaly monitoring based on the stored anomaly rule.

With reference to the first aspect, in some other embodiments, the server may update the anomaly rule in the first terminal.

For example, the first terminal stores a third value and a fourth value. The third value may be used by the first terminal to detect whether a quantity of times of sending the first message to the server in the first unit time exceeds the third value. The fourth value may be used by the first terminal to detect whether a quantity of times that the first terminal receives the second message from the server in the first unit time exceeds the fourth value. The third value and the fourth value may be preset by the first terminal. Alternatively, the third value and the fourth value may be sent by the server to the first terminal.

The risk control module in the server may generate a first anomaly rule based on a current consumption status of software and hardware resources of the server. The first anomaly rule includes the first value. If the server detects that the first message from the first terminal is received for N1 times in the first unit time, and N1 is greater than the first value, the server may send the first anomaly rule to the first terminal. The first terminal may update the third value to the first value. That is, the first terminal updates, to the first anomaly rule, an anomaly rule used for detecting whether sending the first message by the first terminal is an abnormal behavior.

The risk control module in the server may generate a second anomaly rule based on a current consumption status of software and hardware resources of the server. The second anomaly rule includes the second value. If the server detects that the second message is sent to the first terminal for N2 times in the first unit time, and N2 is greater than the second value, the server may send the second anomaly rule to the first terminal. The first terminal may update the fourth value to the second value. That is, the first terminal updates, to the second anomaly rule, an anomaly rule used for detecting whether the sending the second message by the server is an abnormal behavior.

In the foregoing method, an anomaly rule used for performing anomaly detection in the first terminal is not changeless. The foregoing anomaly rule may be adaptively updated based on consumption of software and hardware resources of the server. In this way, the software and hardware resources of the first terminal and the server can be properly used, and the software and hardware resources of the first terminal and the server can be better saved.

With reference to the first aspect, in some embodiments, an Internet of Things system may further include a second terminal. The second terminal may be configured to set a status of the first terminal and obtain a status message of the first terminal by using a server. The server may store an identifier of one or more terminals that is mapped to the second terminal. The one or more terminals include a first terminal.

The second terminal may be a device installed with an application (application, app) for controlling an Internet of Things device. For example, a mobile phone, a tablet computer, a notebook computer, a handheld computer, a personal digital assistant, or a wearable electronic device. A specific type of the second terminal is not limited in this embodiment of this application. The foregoing application is, for example, an Internet of Things app.

When an anomaly occurs in the first terminal or the server, the second terminal may display a message notification used to indicate that an anomaly occurs in the first terminal or a message notification indicating that the first terminal is under anomaly control.

Specifically, if the first terminal sends the first message to the server for N1 times in the first unit time, and N1 is greater than the first value, the second terminal may display a type of the anomaly of the first terminal and/or a solution to the anomaly of the first terminal.

Alternatively, if the first terminal receives the second message from the server for N2 times within the first unit time, and N2 is greater than the second value, the second terminal may display a type of the anomaly control received by the first terminal and/or a solution to the anomaly control received by the first terminal.

In this way, the user may learn, by viewing the second terminal, that the first terminal is abnormal, and resolve the anomaly of the first terminal based on the foregoing solution.

Optionally, when it is detected that an anomaly occurs in the first terminal or the server, the first terminal may notify, by using voice broadcast or different display lights, the user that the first terminal encounters an anomaly.

In this way, the user can know in time that the anomaly occurs in the first terminal, to resolve the anomaly of the first terminal based on a related solution.

With reference to the first aspect, in some embodiments, a physical anomaly monitoring switch may be provided on the first terminal. In response to a user operation performed on the anomaly monitoring switch, the first terminal may enable or disable the anomaly monitoring function. When the anomaly monitoring function is enabled, the first terminal may perform anomaly monitoring based on the foregoing anomaly monitoring method. The first terminal may further send, to the server, a state indicating whether the anomaly monitoring switch is enabled or disabled. The server may store the state of the anomaly monitoring switch. The second terminal may obtain the state of the anomaly monitoring switch by using the server.

In addition, the second terminal may control, by using the Internet of Things app, the anomaly monitoring switch on the first terminal to be turned on and to be turned off. In this way, the user may remotely enable or disable the anomaly monitoring switch on the first terminal by using the second terminal.

According to a second aspect, this application further provides an anomaly monitoring method. The method includes: A server may receive a first message from a first terminal. The server may generate a first value. If the server detects that the first message from the first terminal is received for N1 times in the first unit time, and N1 is greater than the first value, the server may send the first value to the first terminal. The first value may be used by the first terminal to detect whether a quantity of times of sending the first message to the server in the first unit time exceeds the first value. N1 is a positive integer. Alternatively, the server may send a second message to the first terminal. The server may generate a second value. If the server detects that the second message is sent to the first terminal for N2 times in the first unit time, and N2 is greater than the second value, the server may send the second value to the first terminal. The second value may be used by the first terminal to detect whether a quantity of times of receiving the second message from the server in the first unit time exceeds the second value. N2 is a positive integer.

If the first terminal detects, based on the first value from the server, that the quantity of times of sending the first message to the server in the first unit time exceeds the first value, the first terminal may reduce the quantity of times of sending the first message to the server in the first unit time.

In this way, a frequency of the first message that needs to be processed by the first terminal and the server is reduced, so that the first terminal and the server can reduce a waste of software and hardware resources. In addition, the first terminal can still send the first message at a relatively low frequency (that is, lower than a frequency limited in the first anomaly rule). In this way, impact of misjudgment of an abnormal behavior on function implementation of the first terminal can be reduced.

If the first terminal detects, based on the second value from the server, that the quantity of times of receiving the second message from the server in the first unit time exceeds the second value, the first terminal may reduce the quantity of times of responding to the second message in the first unit time. The first terminal can reduce a waste of software and hardware resources.

The first terminal may be the foregoing Internet of Things device. The server may be the foregoing Internet of Things cloud platform.

Based on a device anomaly monitoring method provided in this application, the first terminal may detect whether an anomaly occurs on the first terminal and whether an anomaly occurs on the server. When detecting that the first terminal is abnormal and frequently sends the first message to the server, the first terminal may reduce a frequency of sending the first message. When detecting that an anomaly occurs in the server, and the first terminal frequently receives the second message from the server, the first terminal may reduce a frequency of responding to the second message. In this way, when an anomaly occurs on the first terminal or the server, the first terminal and the server may save software and hardware resources, and reduce a waste of the software and hardware resources.

The first message may include a login request and/or a status message of the first terminal (for example, an on or off state of the first terminal, power consumption of the first terminal, and data collected by a sensor configured for the first terminal). Specific content of the first message is not limited in this embodiment of this application.

The second message may include indication information of a first task. The first task may include setting a status of the first terminal (for example, turning on the first terminal or turning off the first terminal) and/or sending a status message of the first terminal to the server. Specific content of the second message is not limited in this embodiment of this application.

With reference to the second aspect, in some embodiments, the server may update an anomaly rule in the first terminal.

For example, the server may receive the first message from the first terminal. The server may generate a third value. The third value is less than the first value. If the server detects that the first message from the first terminal is received for N3 times within the first unit time, and N3 is greater than the third value, the server may send the third value to the first terminal. The third value may be used to update the first value stored in the first terminal. N3 is a positive integer. Alternatively, the server may send the second message to the first terminal. The server may generate a fourth value. The fourth value is less than the second value. If the server detects that the second message is sent to the first terminal for N4 times in the first unit time and N4 is greater than the fourth value, the server may send the fourth value to the first terminal. The second value may be used to update the second value stored in the first terminal. N4 is a positive integer.

The third value and the fourth value may be generated by the server based on consumption of software and hardware resources of the server. The first terminal may perform anomaly monitoring by using the third value and the fourth value that are obtained after an update.

It can be learned that an anomaly rule used for performing anomaly monitoring in the first terminal is not changeless. The foregoing anomaly rule may be adaptively updated based on consumption of software and hardware resources of the server. In this way, the software and hardware resources of the first terminal and the server can be properly used, and the software and hardware resources of the first terminal and the server can be better saved.

With reference to the second aspect, in some embodiments, the server may store an identifier of one or more terminals that is mapped to the second terminal. The one or more terminals include the first terminal. The second terminal may be configured to set a status of the first terminal and obtain a status message of the first terminal by using the server.

When an anomaly occurs in the first terminal, the server may send, to the second terminal, a message indicating that the anomaly occurs in the first terminal. When the first terminal is under anomaly control of the server, the server may send, to the second terminal, a message indicating that the first terminal is under anomaly control.

For example, if the server detects that the first message from the first terminal is received for N1 times in the first unit time, and N1 is greater than the first value, the server may send a third message to the second terminal. Indication content of the third message may be displayed on the second terminal, and the indication content of the third message includes a type of the anomaly of the first terminal and/or a solution to the anomaly of the first terminal. Alternatively, if the server detects that the second message is sent to the first terminal for N2 times in the first unit time, and N2 is greater than a second value, the server may send a fourth message to the second terminal. Indication content of the fourth message may be displayed on the second terminal, and the indication content of the fourth message includes a type of an anomaly control received by the first terminal and/or a solution to the anomaly control received by the first terminal.

In addition, when the first value is updated by the third value or the second value is updated by the fourth value, the server may determine, based on an updated third value, whether the first terminal encounters an anomaly, and determine, based on the fourth value, whether the first terminal is under anomaly control. If it is determined that the first terminal encounters an anomaly or is under anomaly control, the server may send the third message or the fourth message to the second terminal.

For example, if the server detects that the first message from the first terminal is received for N3 times in the first unit time, and N3 is greater than the third value, the server may send the third message to the second terminal. Indication content of the third message may be displayed on the second terminal, and the indication content of the third message includes a type of the anomaly of the first terminal and/or a solution to the anomaly of the first terminal. Alternatively, if the server detects that the second message is sent to the first terminal for N4 times in the first unit time, and N4 is greater than the fourth value, the server may send the fourth message to the second terminal. Indication content of the fourth message may be displayed on the second terminal, and the indication content of the fourth message includes a type of an anomaly control received by the first terminal and/or a solution to the anomaly control received by the first terminal.

The second terminal may be a device installed with an application (application, app) for controlling an Internet of Things device. For example, a mobile phone, a tablet computer, a notebook computer, a handheld computer, a personal digital assistant, or a wearable electronic device. A specific type of the second terminal is not limited in this embodiment of this application. The foregoing application is, for example, an Internet of Things app.

In this way, the user may learn, by viewing the second terminal, that the first terminal encounters an anomaly, and resolve the anomaly of the first terminal based on the foregoing solution.

According to a third aspect, this application provides a terminal. The terminal may include a communication module, a memory, and a processor, where
the communication module may be configured to establish a communication connection to a server; the memory may be configured to store a computer program; and the processor may be configured to invoke a computer program, to enable the terminal to perform any possible implementation method of the first aspect.

According to a fourth aspect, this application provides a server. The server may include a communication module, a memory, and a processor. The communication module may be configured to establish a communication connection to the terminal. The memory may be configured to store a computer program. The processor may be configured to invoke the computer program in the memory, to enable the server to perform any possible implementation method of the second aspect.

According to a fifth aspect, this application provides a computer-readable storage medium, including instructions. When the instructions are run on the terminal provided in the third aspect, the terminal is enabled to perform any possible implementation method of the first aspect. Alternatively, when the instructions are run on the server provided in the fourth aspect, the server is enabled to perform any possible implementation method of the second aspect.

According to a sixth aspect, this application provides a computer program product. When the computer program product runs on the terminal provided in the third aspect, the terminal is enabled to perform any possible implementation method of the first aspect. Alternatively, when the computer program product runs on the server provided in the fourth aspect, the server is enabled to perform any possible implementation of the second aspect.

According to a seventh aspect, this application provides a chip, where the chip is used in the terminal provided in the third aspect or the server provided in the fourth aspect. The chip includes one or more processors, and the one or more processors are configured to invoke a computer instruction, to enable the terminal provided in the third aspect to perform any possible implementation of the first aspect, or to enable the server provided in the fourth aspect to perform any possible implementation of the second aspect.

It may be understood that the terminal provided in the third aspect, the server provided in the fourth aspect, the computer-readable storage medium provided in the fifth aspect, the computer program product provided in the sixth aspect, and the chip provided in the seventh aspect are all configured to perform the method provided in the embodiments of this application. Therefore, for beneficial effects that can be achieved by the method, refer to beneficial effects in the corresponding method. Details are not described herein again.

### BRIEF DESCRIPTION OF DRAWINGS

FIG. 1A, FIG. 1B(1), and FIG. 1B(2) are schematic diagrams of a scenario in which an Internet of Things device encounters an anomaly according to an embodiment of this application;
FIG. 2 is a schematic diagram of a scenario in which an Internet of Things cloud platform encounters an anomaly according to an embodiment of this application;
FIG. 3 is a schematic diagram of a structure of an Internet of Things system according to an embodiment of this application;
FIG. 4 is a schematic diagram of a setting interface of an Internet of Things application of an electronic device according to an embodiment of this application;
FIG. 5 is a flowchart of a method for monitoring an anomaly of an Internet of Things device according to an embodiment of this application;
FIG. 6 is a flowchart of a method for reducing a frequency of an anomaly behavior of an Internet of Things device by an Internet of Things device according to an embodiment of this application;
FIG. 7 is another flowchart of a method for monitoring an anomaly of an Internet of Things device according to an embodiment of this application;
FIG. 8 is a schematic diagram of a user interface on which an electronic device prompts a user that an Internet of Things device encounters an anomaly according to an embodiment of this application;
FIG. 9 is a flowchart of another method for monitoring an anomaly of an Internet of Things device according to an embodiment of this application;
FIG. 10 is a flowchart of a method for reducing a frequency of anomaly control performed by an Internet of Things device on an Internet of Things cloud platform according to an embodiment of this application;
FIG. 11A and FIG. 11B are another two flowcharts of a method for monitoring an anomaly of an Internet of Things device according to an embodiment of this application;
FIG. 12 is a flowchart of a method for reporting a state of an anomaly monitoring switch by an Internet of Things device according to an embodiment of this application;
FIG. 13A to FIG. 13C are a series of schematic diagrams of user interfaces of an electronic device for controlling an anomaly monitoring switch of an Internet of Things device according to an embodiment of this application;
FIG. 14 is a flowchart of a method for controlling an anomaly monitoring switch of an Internet of Things device by an electronic device according to an embodiment of this application;
FIG. 15 is a flowchart of a device anomaly monitoring method according to an embodiment of this application; and
FIG. 16 is a flowchart of a device anomaly monitoring method according to an embodiment of this application.

### DESCRIPTION OF EMBODIMENTS

Terms used in the following embodiments of this application are merely intended to describe specific embodiments, but are not intended to limit this application. As used in the specification of this application and the appended claims, the singular expression "a", "an", "the", "the foregoing", "such a", or "this" is intended to also include a plural expression unless otherwise clearly indicated in the context. It should also be understood that, the term "and/or" used in this application indicates and includes any or all possible combinations of one or more associated listed items.

Currently, an Internet of Things system may include an Internet of Things device, an Internet of Things cloud platform, and an electronic device (such as a mobile phone or a tablet) configured to control the Internet of Things device. The Internet of Things device may be connected to a network, and log in to the Internet of Things cloud platform. The Internet of Things device can report their status messages to the Internet of Things cloud platform. For example, the Internet of Things device may report, to the Internet of Things cloud platform, whether the Internet of Things device is turned on or standby, power consumption of the Internet of Things device, data collected by a configured sensor, and the like. The Internet of Things device may further respond to a control instruction delivered by the Internet of Things cloud platform. The Internet of Things device may be a home device with a networking function, a transportation device with a networking function, an industrial application device with a networking function, an agricultural application device with a networking function, a military application device with a networking function, or the like. For example, the Internet of Things device may be a device such as a smart light, a smart fan, a smart air conditioner, a smart television, a smart band, a smart speaker, a smart refrigerator, a smart door or window, a smart car, an in-vehicle infotainment, a smart monitor, or a smart robot. A type of the Internet of Things device is not limited in this embodiment of this application.

The Internet of Things cloud platform may be configured to connect the Internet of Things device and the electronic device. Specifically, the Internet of Things cloud platform may store status message reported by the Internet of Things device. The electronic device may obtain a status message of the Internet of Things device from the Internet of Things cloud platform. The electronic device may deliver a control instruction to the Internet of Things device by using the Internet of Things cloud platform. In this way, the electronic device can remotely control the Internet of Things device.

The electronic device may be a device installed with an application (application, app) for controlling an Internet of Things device. For example, the electronic device may be a device such as a mobile phone, a tablet computer, a notebook computer, a handheld computer, a personal digital assistant (personal digital assistant, PDA), or a wearable electronic device. The app used to control the Internet of Things device may be an Internet of Things app. The electronic device may obtain the status message of the Internet of Things device through the foregoing Internet of Things app, and send an instruction for controlling the Internet of Things device. To be specific, the user may view the status message of the Internet of Things device and control the Internet of Things device through the Internet of Things app on the electronic device. For example, the electronic device controls the Internet of Things device through the Internet of Things app, which may be: In a scenario in which the Internet of Things device is a smart light, the electronic device may turn on the smart light, turn off the smart light, adjust brightness of the smart light, or the like through the Internet of Things app. In a scenario in which the Internet of Things device is a smart speaker, the electronic device may enable the smart speaker, disable the smart speaker, adjust a volume of the smart speaker, switch audio played by the smart speaker, pause playing, or the like through an Internet of Things app.

However, in the foregoing Internet of Things system, the Internet of Things cloud platform and the Internet of Things device may encounter an anomaly. In this way, software and hardware resources of the Internet of Things cloud platform and the Internet of Things device are wasted.

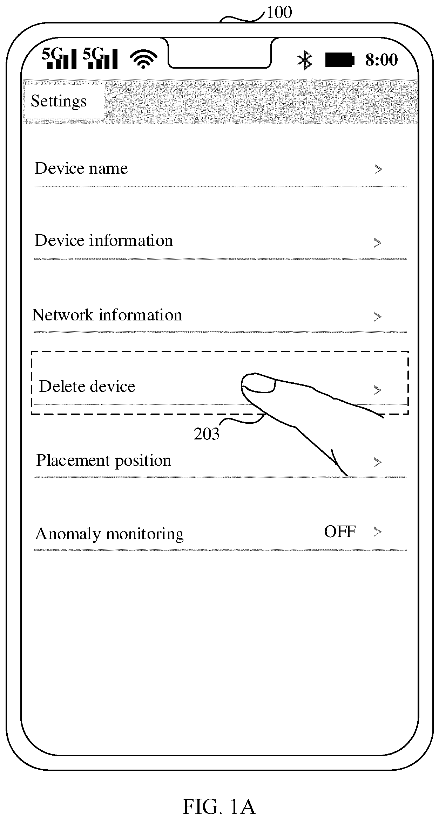

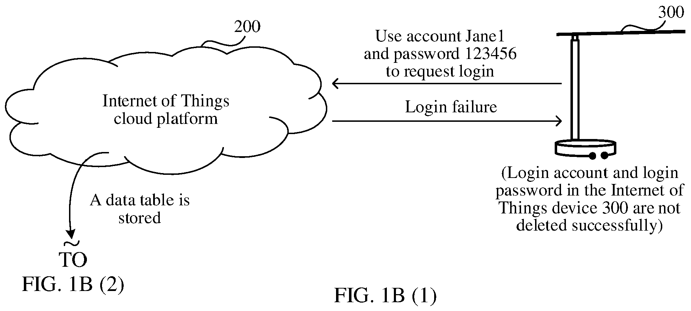

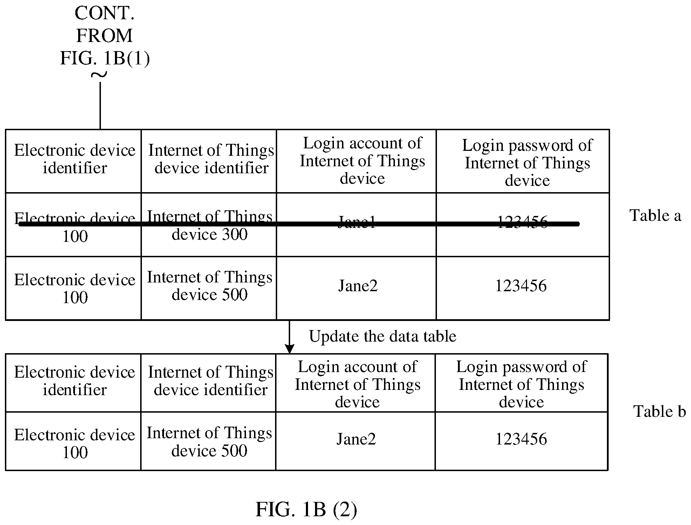

FIG. 1A, FIG. 1B(1), and FIG. 1B(2) show schematic diagrams of a scenario in which the Internet of Things device encounters an anomaly as an example.

The electronic device 100 may enable an Internet of Things app and display a setting interface shown in FIG. 1A. In response to a user operation acting on delete device option 203 in the setting interface, the electronic device 100 may send an instruction of deleting an Internet of Things device 300 to an Internet of Things cloud platform 200.

As shown in FIG. 1B(2), the Internet of Things cloud platform 200 may store a data table. The data table may be used to indicate a pairing relationship between the electronic device and the Internet of Things device. For example, the electronic device 100 establishes a pairing relationship with both an Internet of Things device 300 and an Internet of Things device 500. Specifically, the data table may include fields: Electronic device identifier, Internet of Things device identifier, Login account of Internet of Things device, and Login password of Internet of Things device. The electronic device identifier may be used to uniquely identify the electronic device. The Internet of Things device identifier may be used to uniquely identify the Internet of Things device. The login account of the Internet of Things device and the login password of Internet of Things device can be used by the Internet of Things device to log in to the Internet of Things cloud platform. When the Internet of Things device 300 logs in to the Internet of Things cloud platform 200 by using the login account of the Internet of Things device and the login password of the Internet of Things device, the electronic device 100 may use the Internet of Things app to control the Internet of Things device 300 through the Internet of Things cloud platform 200. The Internet of Things device 300 may also report a status message of the Internet of Things device 300. For example, the Internet of Things device 300 is a smart light. The electronic device 100 is a mobile phone. When the smart light logs in to the Internet of Things cloud platform 200, the mobile phone may control, by using the Internet of Things cloud platform 200, the smart light to be turned on and turned off. The smart light may report, to the Internet of Things cloud platform 200, a status message indicating that the smart light is on or off, or the like. In this way, the mobile phone may obtain the status message of the smart light by using the Internet of Things cloud platform 200.

When receiving the instruction for deleting the Internet of Things device 300, the Internet of Things cloud platform 200 may delete a control instruction of the electronic device 100 and the Internet of Things device 300 in the data table. To be specific, the Internet of Things cloud platform 200 may update the data table from a table a to a table b.

However, due to a possible network problem, the Internet of Things device 300 (for example, a smart light) skips deleting information such as an account and a password used to log in to the Internet of Things cloud platform. The electronic device 100 and the Internet of Things cloud platform 200 have deleted related information of the smart light 300. In this way, the smart light 300 cannot enter a to-be-distributed network status. In other words, when the smart light 300 requests to log in to the Internet of Things cloud platform 200 by using the account and the password (for example, account Janel and password 123456) before the foregoing deletion operation is performed, due to absence of the account and the password of the smart light 300 on the Internet of Things cloud platform 200, the Internet of Things cloud platform 200 may return information of login failure to the smart light 300. In this way, the smart light 300 is in an abnormal state, and frequently sends a login request to the Internet of Things cloud platform 200. A behavior of the smart light 300 frequently requesting to log in consumes a large quantity of software and hardware resources of the smart light 300 and the Internet of Things cloud platform 200.

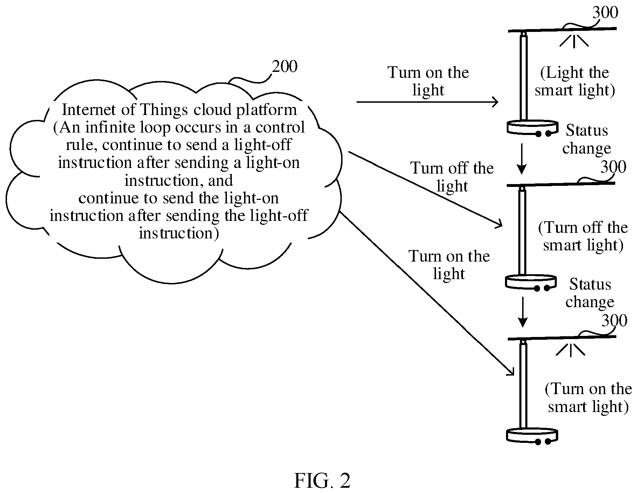

FIG. 2 shows a schematic diagram of a scenario in which the Internet of Things cloud platform encounters an anomaly as an example.

As shown in FIG. 2, an infinite loop occurs in a control rule on the Internet of Things cloud platform. That an infinite loop occurs in the control rule may be that the Internet of Things cloud platform 200 sends, to the smart light 300, an instruction for turning on a light. After sending the instruction for turning on the light, the Internet of Things cloud platform 200 then sends, to the smart light 300, an instruction for turning off the light. After sending the instruction for turning off the light, the Internet of Things device 200 continues to send, to the smart light 300, the instruction for turning on the light. A foregoing repeated cycle occurs on the Internet of Things cloud platform 200. When receiving an instruction for turning on the light, the smart light 300 may be turned on. When receiving an instruction for turning off the light, the smart light 300 may be turned off. The foregoing Internet of Things cloud platform encounters an anomaly, and a behavior of frequently sending a control instruction to the smart light 300 consumes a large quantity of software and hardware resources of the smart light 300 and the Internet of Things cloud platform 200.

Abnormal behaviors that occur on the Internet of Things device and the Internet of Things cloud platform are not limited in this embodiment of this application. For example, the anomaly that occurs on the Internet of Things device 300 may alternatively be that the Internet of Things device 300 frequently reports a status message of the Internet of Things device 300 to the Internet of Things cloud platform 200. Before the Internet of Things device 300 unsuccessfully logs in to the Internet of Things cloud platform 200, the Internet of Things cloud platform 200 cannot identify a status message reported by the Internet of Things device 300. In this case, when receiving the status message, the Internet of Things cloud platform 200 skips returning, to the Internet of Things device 300, a notification used to indicate that the status message is successfully received. Further, the Internet of Things device 300 may frequently report a status message to the Internet of Things cloud platform 200. Alternatively, due to an error in a software development kit (soft development kit, SDK) in the Internet of Things device 300, a network problem, or the like, a portion of fields are missing in the status message reported by the Internet of Things device 300 to the Internet of Things cloud platform 200. When a status message of a missing portion of fields is received, the Internet of Things cloud platform 200 cannot parse the status message. In this case, the Internet of Things cloud platform 200 skips returning, to the Internet of Things device 300, a notification used to indicate that the status message is successfully received. Further, the Internet of Things device 300 may also frequently report a status message to the Internet of Things cloud platform 200. In addition, an anomaly that occurs on the Internet of Things cloud platform 200 may alternatively be that the Internet of Things cloud platform 200 frequently sends a control instruction to the Internet of Things device 300 or frequently requests to obtain a status message of the Internet of Things device 300 due to an infinite loop of a control rule, an invalid flow control mechanism, a malicious attack on the Internet of Things cloud platform 200, or the like. For example, the Internet of Things device 300 is a smart speaker. The Internet of Things cloud platform 200 frequently sends, to the smart speaker, a control instruction for adjusting a volume, a control instruction for switching a song, a control instruction for adjusting a play mode of the smart speaker, or the like.

The abnormal behavior is not limited to the foregoing abnormal behavior. The abnormal behavior that occurs on the Internet of Things device and the Internet of Things cloud platform mentioned in the embodiments of this application may alternatively be another abnormal behavior.

It should be noted that the software and hardware resources may include a hardware resource and a software resource. The hardware resource may include a computing resource (for example, a central processing unit performs related computing) and a storage resource (for example, a memory stores related data). The software resource may include system software and application software.

In some embodiments, the Internet of Things system may monitor on the Internet of Things cloud platform, whether an anomaly occurs. Specifically, a flow control mechanism may be set on the Internet of Things cloud platform. This flow control mechanism can be used to process abnormal behaviors such as frequently sending request by the Internet of Things device and frequently sending the control instruction by the Internet of Things cloud platform. For example, when the Internet of Things device frequently sends a same request to the Internet of Things cloud platform, the Internet of Things cloud platform may reduce a frequency of processing the same request, thereby saving software and hardware resources of the Internet of Things cloud platform. Specifically, when the Internet of Things device encounters an anomaly, for example, frequently sending a login request to the Internet of Things cloud platform, the Internet of Things cloud platform may partially discard the login request from the Internet of Things device based on a flow control mechanism. For example, the Internet of Things cloud platform receives 60 login requests from the Internet of Things device within one minute. The Internet of Things cloud platform can process the first 30 login requests based on the flow control mechanism and return a login failure message to the Internet of Things device. The Internet of Things cloud platform can discard subsequent 30 login requests received within one minute. In this way, software and hardware resources of the Internet of Things cloud platform can be saved to some extent. However, in the foregoing anomaly monitoring method, the Internet of Things device is still in an abnormal state, and frequently sends a request to the Internet of Things cloud platform. Software and hardware resources of the Internet of Things device are still greatly occupied and wasted. The Internet of Things cloud platform still needs to consume software and hardware resources to process requests sent by the Internet of Things device.

An embodiment of this application provides a device anomaly monitoring method. In the method, an anomaly monitoring switch may be configured in both the Internet of Things app and the Internet of Things device of the electronic device. A status of the anomaly monitoring switch on the Internet of Things device may be consistent with a status of the anomaly monitoring switch on the Internet of Things app. The Internet of Things device stores an anomaly rule used for determining an abnormal behavior. When the anomaly monitoring switch of the Internet of Things device is enabled, the Internet of Things device may record a frequency at which the Internet of Things device sends a request (for example, a login request) to the Internet of Things cloud platform, and determine, based on the anomaly rule, whether the request sent by the Internet of Things device is an abnormal behavior. If it is determined that sending the request by the Internet of Things device is an abnormal behavior, the Internet of Things device may reduce a frequency of sending the request, thereby reducing consumption of software and hardware resources of the Internet of Things device and the Internet of Things cloud platform.

In addition, the Internet of Things device may further record a frequency of a control instruction (for example, a turn-on instruction) received from the Internet of Things cloud platform, and determine, based on the anomaly rule, whether the control instruction sent by the Internet of Things cloud platform is an abnormal behavior. If it is determined that sending the control instruction by the Internet of Things device is an abnormal behavior, the Internet of Things device may send an anomaly response to the Internet of Things cloud platform, and reduce a frequency of responding to the control instruction in the abnormal behavior. In this way, the Internet of Things device can reduce consumption of software and hardware resources of the Internet of Things device.

A risk control module can be configured on the Internet of Things cloud platform. The risk control module may record the anomaly response sent by the Internet of Things device, to further determine that the Internet of Things cloud platform encounters an anomaly. The Internet of Things cloud platform may reduce, based on the flow control mechanism, a frequency of sending the control instruction in the foregoing abnormal behavior, thereby saving software and hardware resources of the Internet of Things device and the Internet of Things cloud platform.

The risk control module may further record a frequency at which the Internet of Things device sends a request (for example, a login request) to the Internet of Things cloud platform, and determine, based on an anomaly rule, whether sending the request by the Internet of Things device is an abnormal behavior. When the risk control module determines that the Internet of Things cloud platform and/or the Internet of Things device are/is in an abnormal state, the Internet of Things cloud platform may send a notification to the electronic device. The notification may be used to indicate that the Internet of Things device is in an anomaly request state or in an abnormal controlled state. In this way, the user may learn, by using the Internet of Things app on the electronic device, that the Internet of Things device is abnormal, and may further process such anomaly based on a related operation prompt.

The risk control module may be further configured to update the anomaly rule stored in the Internet of Things device. Specifically, the risk control module may generate, based on a current consumption status of software and hardware resources of the Internet of Things cloud platform, an anomaly rule used for determining whether a behavior of the Internet of Things device or the Internet of Things cloud platform is an abnormal behavior. The risk control module may send a new anomaly rule to the Internet of Things device. When receiving an anomaly rule delivered by the risk control module of the Internet of Things cloud platform, the Internet of Things device may update a locally stored anomaly rule, and perform anomaly monitoring by using an updated anomaly rule. In this way, the Internet of Things device may adjust, based on consumption of software and hardware resources of the Internet of Things cloud platform, a frequency of interaction between the Internet of Things device and the Internet of Things cloud platform, to more properly use the software and hardware resources of the Internet of Things cloud platform.

Based on the anomaly monitoring method provided in the embodiments of this application, whether an anomaly occurs on the Internet of Things device and the Internet of Things cloud platform or not can be monitored. Based on the method, when the Internet of Things device frequently sends an anomaly request to the Internet of Things cloud platform, a frequency of sending the anomaly request by the Internet of Things device can be reduced. According to the method, when the Internet of Things cloud platform frequently sends an abnormal control instruction to the Internet of Things device, a frequency of responding to the abnormal control instruction by the Internet of Things device can be further reduced. In this way, software and hardware resources of the Internet of Things device and the Internet of Things cloud platform can be saved more effectively.

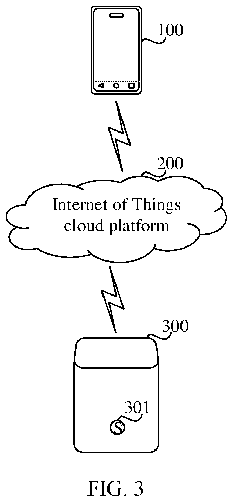

FIG. 3 shows an example of an Internet of Things system according to an embodiment of this application.

As shown in FIG. 3, the Internet of Things system may include an electronic device 100, an Internet of Things cloud platform 200, and an Internet of Things device 300. An Internet of Things app used to control the Internet of Things device 300 may be installed in the electronic device 100. The electronic device 100 may obtain a status message of the Internet of Things device 300 by using the Internet of Things app, and send a control instruction for controlling the Internet of Things device 300. The Internet of Things app may include an anomaly monitoring switch. The anomaly monitoring switch may be used to enable or disable an anomaly monitoring switch 301 on the Internet of Things device 300.

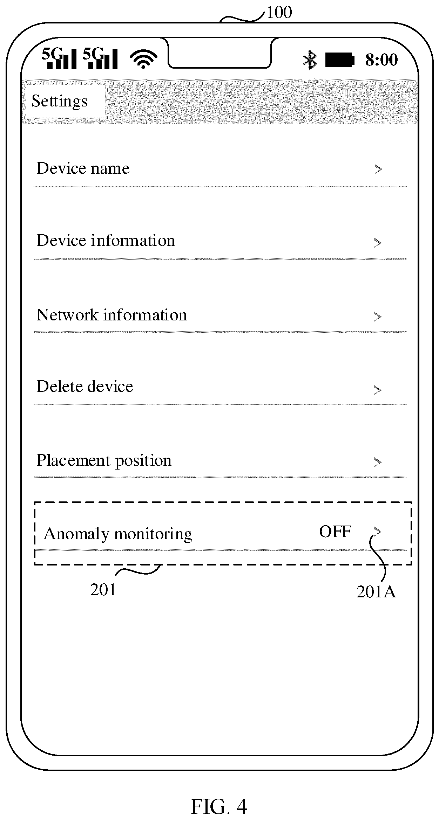

FIG. 4 shows an anomaly monitoring switch on an Internet of Things app as an example.

As shown in FIG. 4, an Internet of Things app is installed in the electronic device 100. In response to a user operation for starting a setting interface of the Internet of Things app, the electronic device 100 may display a setting interface shown in FIG. 4. The setting interface may include an anomaly monitoring status 201. The anomaly monitoring status 201 may be used to prompt the user whether an anomaly monitoring switch on the Internet of Things device 300 is enabled or disabled. For example, the anomaly monitoring status 201 shown in FIG. 2 includes a prompt "OFF". This may indicate that the anomaly monitoring switch on the Internet of Things device 300 is disabled.

The anomaly monitoring status 201 may include an anomaly monitoring switch 201A. In response to a user operation acting on the anomaly monitoring switch 201A, the electronic device 100 may enable or disable the anomaly monitoring switch on the Internet of Things device 300 based on selection of the user.

The Internet of Things cloud platform 200 may be configured to connect the electronic device 100 and the Internet of Things device 300. The Internet of Things cloud platform 200 may establish a communication connection to the electronic device 100 and the Internet of Things device 300. The communication connection may be a Bluetooth (bluetooth, BT) communication connection, a wireless fidelity (wireless fidelity, Wi-Fi) communication connection, a ZigBee communication connection, a near field communication (near field communication, NFC) connection, or the like. A manner in which the Internet of Things cloud platform 200 communicates with the electronic device 100 and the Internet of Things device 300 is not limited in this embodiment of this application. In addition to communication protocols in the conventional technology, communication may be performed by using a possible communication protocol in a future technology.

The Internet of Things cloud platform 200 may include a communication module, a processing module, and a storage module. The communication module may be used by the Internet of Things cloud platform 200 to communicate with the electronic device 100 and the Internet of Things device 300. For example, the communication module of the Internet of Things cloud platform 200 may communicate with the Internet of Things device 300 by using a first interface, and communicate with the electronic device 100 by using a second interface. The storage module may be configured to store correspondence information of the electronic device 100 and an Internet of Things device connected to the electronic device 100, a status message reported by the Internet of Things device 300 (for example, a state in which the Internet of Things device 300 is turned on or off, power consumption, and a state in which the anomaly monitoring switch 301 on the Internet of Things device 300 is enabled or disabled), an account and a password that are used by the Internet of Things device 300 to log in to the Internet of Things cloud platform, and the like.

For example, Table 1 is a data table in the storage module provided in this embodiment of this application. The data table may be used to store related information of the electronic device 100 and an Internet of Things device connected to the electronic device.

**Table 1**

| Electronic device identifier | Internet of Things device identifier | Login account of Internet of Things device | Login password of Internet of Things device | Turn-on state of Internet of Things device | Internet of Things device abnormal monitor | Power consumption of Internet of Things device |
|---|---|---|---|---|---|---|
| Electronic device 100 | Internet of Things device 300 | Janel | 123456 | 1 | 1 | 278 |
| Electronic device 100 | Internet of Things device 500 | Jane2 | 123456 | 0 | 1 | 169 |
| Electronic device 400 | Internet of Things device 600 | Mike | 666666 | 1 | 0 | 399 |

It can be learned from Table 1 that related information of an electronic device and an Internet of Things device connected to the electronic device may be correspondingly stored.

In the data table shown in Table 1, a field "Electronic device identifier" may be a keyword. To be specific, the Internet of Things cloud platform 200 may search, based on an electronic device in a column of the field "Electronic device identifier", for an Internet of Things device connected to the electronic device. The field "Electronic device identifier" may include an identifier of each electronic device, for example, an international mobile equipment identity (international mobile equipment identity, IMEI). The identifier of the electronic device may be used to uniquely identify the electronic device.

The data table may further include a field "Internet of Things device identifier", a field "Login account of Internet of Things device", a field "Login password of Internet of Things device", a field "Turn-on state of Internet of Things device", and a field "Internet of Things device abnormal monitor", and a field "Power consumption of Internet of Things devices". The data table may further include more or fewer fields. This is not limited in this embodiment of this application.

The foregoing field "Internet of Things device identifier" may include an identifier of the Internet of Things device. The identifier of the Internet of Things device may uniquely identify the Internet of Things device.

The foregoing field "Login account of Internet of Things device" and the foregoing field "Login password of Internet of Things device" may be an account and a password used by the Internet of Things device to log in to the Internet of Things cloud platform. In a possible implementation, the account and the password may be allocated by the electronic device based on a related setting of the user after the electronic device is connected to the Internet of Things device. For example, the electronic device 100 is paired with the Internet of Things device 300 for the first time, and the electronic device 100 may display a related user interface. The user interface may be used to set an account and a password of the Internet of Things device 300 for logging in to the Internet of Things cloud platform 200. In response to the user operation of setting the account and the password, the electronic device 100 may send the account and the password to the Internet of Things device 300 by using the Internet of Things cloud platform 200. The Internet of Things cloud platform 200 may store the account and the password in a data table shown in FIG. 1B(2). The Internet of Things device 300 may also store the account and the password, and log in to the Internet of Things cloud platform 200 by using the account and the password. When the Internet of Things device 300 successfully logs in to the Internet of Things cloud platform 200, the electronic device 100 may control a related function of the Internet of Things device 300 by using the Internet of Things cloud platform 200, for example, turning on or turning off the Internet of Things device 300, or adjusting volume of the Internet of Things device 300. The electronic device 100 may further obtain the status message of the Internet of Things device 300 by using the Internet of Things cloud platform 200.

The foregoing field "Turn-on state of Internet of Things device" may indicate that the Internet of Things device is turned on or turned off. For example, a value of the field being 1 may indicate that the Internet of Things device is turned on. If a value of the field is 0, it may indicate that the Internet of Things device is turned off.

The foregoing field "Internet of Things device abnormal monitor" may indicate that anomaly monitoring of the Internet of Things device is enabled or disabled. For example, a value of the field being 1 may indicate that anomaly monitoring is enabled. A value of the field being 0 may indicate that anomaly monitoring is disabled.

The foregoing field "Power consumption of Internet of Things device" may indicate power consumption of the Internet of Things device.

The storage module may be further configured to store a computer program and a related rule, for example, a rule used for determining whether the Internet of Things device or the Internet of Things cloud platform is abnormal. The processing module may be configured to: execute the computer program in the storage module, process requests from the electronic device 100 and the Internet of Things device 300, and send notifications to the electronic device 100 and the Internet of Things device 300. The processing module may further perform, based on a flow control mechanism on the Internet of Things cloud platform 200, flow control on a control instruction sent by the Internet of Things cloud platform 200 and a request from the Internet of Things device 300.

The Internet of Things cloud platform 200 may further include a risk control module. The risk control module may be configured to: record a frequency of a request from the Internet of Things device 300, and determine, according to an anomaly rule, whether the request from the Internet of Things device 300 is an anomaly request. The risk control module may be further configured to record an anomaly response returned by the Internet of Things device 300. The anomaly response may be sent by the Internet of Things device 300 when the Internet of Things device 300 determines that the control instruction sent by the Internet of Things cloud platform is an abnormal control instruction. The risk control module may be further configured to update the anomaly rule stored in the Internet of Things device 300. The anomaly rule may be used for determining whether the Internet of Things device 300 or the Internet of Things cloud platform 200 is abnormal. For example, the anomaly rule stored in the Internet of Things device 300 includes: When a frequency at which the Internet of Things device 300 sends a login request to the Internet of Things cloud platform 200 is higher than 30 times/minute, the Internet of Things device 300 may determine that a sent login request is an anomaly request.

The Internet of Things cloud platform 200 may further include more or fewer modules. This is not limited in this embodiment of this application.

The Internet of Things device 300 may be provided with an anomaly monitoring switch 301. In addition, the Internet of Things device 300 includes an anomaly rule used for determining an abnormal behavior of the Internet of Things device and an abnormal behavior of the Internet of Things cloud platform.

In condition that the anomaly monitoring switch 301 is enabled, when sending a message to the Internet of Things cloud platform, the Internet of Things device 300 may determine, based on the foregoing anomaly rule, whether sending the message is an abnormal behavior. If it is determined that the behavior is an abnormal behavior, the Internet of Things device 300 may discard the message. In this way, the Internet of Things device 300 skips sending the message to the Internet of Things cloud platform. The Internet of Things cloud platform may also skip processing the message. In condition that the anomaly monitoring switch 301 is enabled, when receiving a message sent by the Internet of Things cloud platform 200, the Internet of Things device 300 may determine, based on the foregoing anomaly rule, whether sending the message by the Internet of Things cloud platform 200 is an abnormal behavior. If it is determined that the behavior is an abnormal behavior, the Internet of Things device 300 may skip responding to the message sent by the Internet of Things cloud platform 200.

In the Internet of Things system shown in FIG. 3, when the anomaly monitoring switch 301 is enabled, the Internet of Things device 300 may monitor, based on a locally stored anomaly rule, whether the Internet of Things device 300 and the Internet of Things cloud platform 200 encounter an anomaly. When detecting that the Internet of Things device 300 frequently sends an anomaly request to the Internet of Things cloud platform 200, the Internet of Things device 300 may reduce a frequency of sending the anomaly request by the Internet of Things device 300. When detecting that the Internet of Things cloud platform 200 frequently sends an anomaly control instruction to the Internet of Things device 300, the Internet of Things device 300 may reduce a frequency of the Internet of Things device responding to the anomaly control instruction. In this way, software and hardware resources of the Internet of Things device 300 and the Internet of Things cloud platform 200 can be saved effectively.

In the Internet of Things system shown in FIG. 3, when the anomaly monitoring switch 301 of the Internet of Things device 300 is enabled or disabled, a status of the anomaly monitoring switch on the Internet of Things app on the electronic device 100 may be enabled or disabled accordingly. In this way, the user may know a status of the anomaly monitoring switch 301 of the Internet of Things device 300 based on a status of the anomaly monitoring switch on the Internet of Things app.

In addition, in the Internet of Things system shown in FIG. 3, the electronic device 100 may control a status of the anomaly monitoring switch 301 on the Internet of Things device 300 through the Internet of Things app. In this way, when the user is not next to the Internet of Things device 300 or it is inconvenient to enable or disable the anomaly monitoring switch 301 on the Internet of Things device 300, the user may enable or disable the anomaly monitoring switch 301 on the Internet of Things device 300 by using the Internet of Things app.

When the anomaly monitoring switch 301 is enabled, the Internet of Things device 300 may monitor, based on a locally stored anomaly rule, whether the Internet of Things device 300 encounters an anomaly.

For an abnormal behavior that occurs in the Internet of Things device 300, refer to descriptions in the foregoing embodiment. The following specifically uses an example in which an anomaly occurring on the Internet of Things device 300 is frequently sending a same request (for example, a login request) to the Internet of Things cloud platform 200 for description.

The foregoing anomaly rule used for monitoring whether the Internet of Things device 300 has an abnormal behavior may be: A frequency at which the Internet of Things device 300 sends a same request exceeds a preset frequency. For example, in the anomaly rule, a preset frequency used to determine whether a behavior of sending the login request by the Internet of Things device 300 is an abnormal behavior is 30 times/minute. When the Internet of Things device 300 sends the login request to the Internet of Things cloud platform 200 at a frequency of more than 30 times/minute, for example, 50 times/minute, the Internet of Things device 300 may determine that a behavior of sending the login request is an abnormal behavior.

The anomaly rule may further be as follows: When the Internet of Things device 300 sends a message to the Internet of Things cloud platform 200, a frequency at which the Internet of Things device 300 receives a same feedback from the Internet of Things cloud platform 200 exceeds a preset frequency. For example, after the Internet of Things device 300 sends the login request to the Internet of Things cloud platform 200, if a message that the Internet of Things device 300 receives login failure fed back by the Internet of Things cloud platform 200 exceeds a preset frequency, the Internet of Things device 300 may determine that a behavior of sending the login request is an abnormal behavior. Specific content of the foregoing anomaly rule is not limited in this embodiment of this application.

The anomaly rule may be stored in an erasable storage module of the Internet of Things device 300. For example, an electrically erasable programmable read only memory (electrically erasable programmable read only memory, EEPROM), or an erasable programmable read only memory (erasable programmable read only memory, EPROM). A specific type of the foregoing erasable storage module is not limited in this embodiment of this application.

In a possible implementation, the anomaly rule may be preset in an erasable storage module of the Internet of Things device 300 before delivery. The anomaly rule may be further delivered by the Internet of Things cloud platform 200. When receiving the anomaly rule delivered by the Internet of Things cloud platform 200, the Internet of Things device 300 may update, in the erasable storage module, the anomaly rule preset before delivery or the latest anomaly rule delivered by the Internet of Things cloud platform 200. To be specific, the Internet of Things device 300 may delete, from the erasable storage module, an anomaly rule preset before delivery or the latest anomaly rule delivered by the Internet of Things cloud platform 200, and store, into the erasable storage module, an anomaly rule delivered by the Internet of Things cloud platform 200 this time.

In addition, the foregoing anomaly rule may include a plurality of anomaly rules used for determining whether different behaviors are abnormal behaviors. For example, an anomaly rule used for determining whether sending the login request by the Internet of Things device 300 is an abnormal behavior may be different from an anomaly rule used for determining whether sending a status message by the Internet of Things device 300 is an abnormal behavior. A difference between anomaly rules may specifically be that frequencies set in the anomaly rules are different. A specific value of a frequency in the anomaly rule is not limited in this embodiment of this application.

With reference to an application scenario in which an Internet of Things device encounters an anomaly, the following specifically describes a device anomaly monitoring method provided in an embodiment of this application.

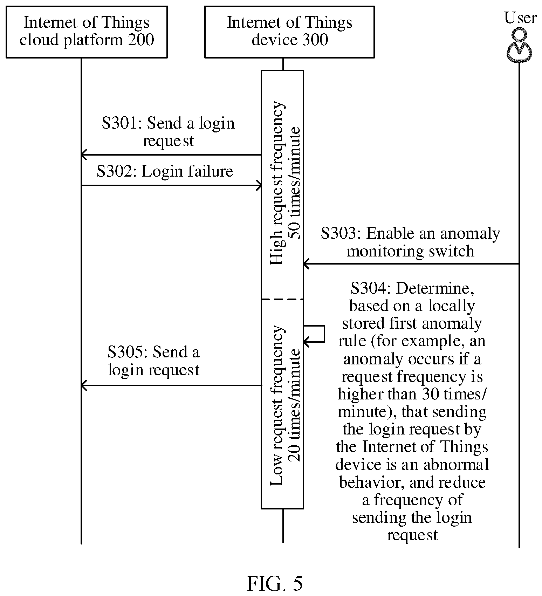

FIG. 5 shows a flowchart of a device anomaly monitoring method as an example. The method may include steps S301 to S305, where
an abnormal behavior occurs in the Internet of Things device 300. Specifically, the abnormal behavior may be that the Internet of Things device 300 frequently sends a login request to the Internet of Things cloud platform 200. A reason why the abnormal behavior occurs may be that the Internet of Things cloud platform 200 mentioned in the foregoing embodiment has deleted the account and the password used for login of the Internet of Things device 300, but the Internet of Things device 300 fails to be deleted, and requests login by using the deleted account and password. Because the Internet of Things device 300 cannot log in successfully, the Internet of Things device 300 may frequently request login.

S301: The Internet of Things device 300 sends a login request to the Internet of Things cloud platform 200.

The login request may include an account and a password. In response to a request from the electronic device 100 for deleting the Internet of Things device 300, the Internet of Things cloud platform 200 has deleted the account and the password.

S302: The Internet of Things cloud platform 200 sends a message of login failure to the Internet of Things device 300.

Because the Internet of Things cloud platform 200 has deleted the account and the password that are used by the Internet of Things device 300 to log in to the Internet of Things cloud platform 200, the Internet of Things device 300 cannot successfully log in to the Internet of Things cloud platform 200. The Internet of Things cloud platform 200 may send a message of login failure to the Internet of Things device 300.

When receiving the message of login failure from the Internet of Things cloud platform 200, the Internet of Things device 300 may send a login request to the Internet of Things cloud platform 200 again. Further, the Internet of Things cloud platform 200 may send a message of login failure to the Internet of Things device 300 again. Interaction between the steps S301 and S302 may always exist between the Internet of Things device 300 and the Internet of Things cloud platform 200. For example, because the Internet of Things device 300 cannot log in successfully, the Internet of Things device 300 frequently requests login. The request frequency reaches 50 times/minute.

S303: The Internet of Things device 300 receives a user operation used to enable the anomaly monitoring switch 301.

When receiving the user operation for enabling the anomaly monitoring switch 301, the Internet of Things device 300 may enable the anomaly monitoring switch 301.

S304: The Internet of Things device 300 determines, based on a locally stored first anomaly rule (for example, an anomaly occurs if a request frequency is higher than 30 times/minute), that sending a login request by the Internet of Things device 300 is an abnormal behavior, and reduces a frequency of sending the login request.

When the anomaly monitoring switch 301 is enabled, the Internet of Things device 300 may record a quantity of times that the Internet of Things device 300 sends a login request, and compare a frequency of sending the login request with the first anomaly rule. If determining that the frequency of sending the login request is higher than a frequency set in the first anomaly rule, the Internet of Things device 300 may determine that sending the login request is an abnormal behavior, thereby reducing the frequency of sending the login request.

A specific value of the frequency set in the first anomaly rule is not limited in this embodiment of this application.

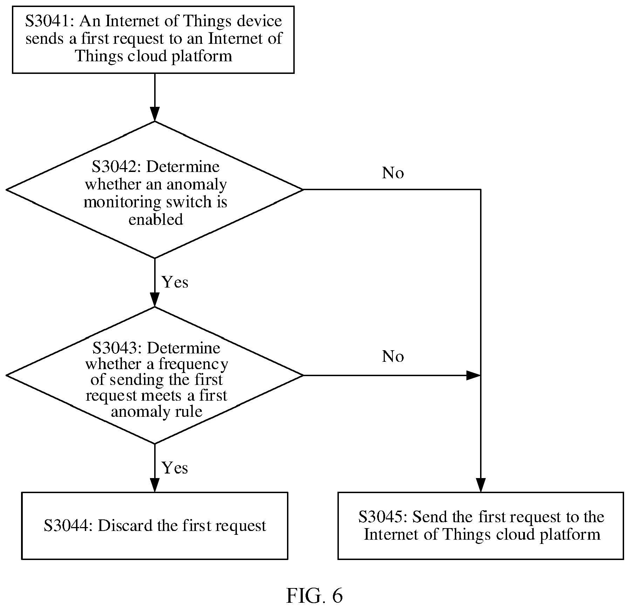

In a possible implementation, the Internet of Things device 300 may perform anomaly monitoring according to the flowchart of the method shown in FIG. 6, and reduce a frequency of an abnormal behavior.

As shown in FIG. 6, the method may include steps S3041 to S3045.

S3041: The Internet of Things device 300 sends a first request to the Internet of Things cloud platform 200.

The first request may be the login request in step S301.

The first request may also be another request sent by the Internet of Things device 300 to the Internet of Things cloud platform 200, a reported status message of the Internet of Things device 300, or the like. Specific content of the first request is not limited in this embodiment of this application.

S3042: The Internet of Things device 300 determines whether the anomaly monitoring switch 301 is enabled.

Before sending the first request to the Internet of Things cloud platform 200, the Internet of Things device 300 may first determine whether the anomaly monitoring switch 301 is enabled.

If the anomaly monitoring switch 301 is enabled, the Internet of Things device 300 may perform anomaly monitoring. Specifically, the Internet of Things device 300 may further perform step S3043.

If the anomaly monitoring switch 301 is disabled, the Internet of Things device 300 skips performing anomaly monitoring. Specifically, the Internet of Things device 300 may further perform step S3045.

In a possible implementation, the Internet of Things device 300 may determine, by determining a level status on a pin corresponding to the anomaly monitoring switch 301, whether the anomaly monitoring switch 301 is enabled. For example, when determining that the level status on the pin corresponding to the anomaly monitoring switch 301 is a high level, the Internet of Things device 300 may determine that the anomaly monitoring switch 301 is enabled. When determining that the level status on the pin corresponding to the anomaly monitoring switch 301 is a low level, the Internet of Things device 300 may determine that the anomaly monitoring switch 301 is disabled.

A manner in which the Internet of Things device 300 determines whether the anomaly monitoring switch 301 is enabled is not limited in this embodiment of this application.

S3043: The Internet of Things device 300 determines whether a frequency of sending the first request meets a first anomaly rule.

The first anomaly rule may be preset before the Internet of Things device 300 is delivered from a factory. For example, the first anomaly rule may be as follows: If a frequency of sending the first request (for example, a login request) by the Internet of Things device 300 is higher than 30 times/minute, the Internet of Things device 300 may determine that sending the first request is an abnormal behavior.

A scenario in which a first request in step S3041 sent by the Internet of Things device 300 is that the Internet of Things device 300 sends the first request for the 31st time within one minute is used as an example for description. To be specific, the Internet of Things device 300 has sent the first request for 30 times in less than one minute. In this case, the Internet of Things device 300 may determine that sending the first request for the 31st time meets the foregoing first rule, and may further determine that sending the first request is an abnormal behavior.

Further, the Internet of Things device 300 may perform step S3044.

If the Internet of Things device 300 determines that a frequency of sending the first request does not meet the first anomaly rule, that is, the frequency of sending the first request does not exceed a frequency set in the first anomaly rule, the Internet of Things device 300 may perform step S3045.

In a possible implementation, a specific method for determining, by the Internet of Things device 300, whether the frequency of sending the first request meets the first anomaly rule may be as follows: The Internet of Things device 300 may record a time at which the first request is sent each time. When the first request is sent for the n-th time, the Internet of Things device 300 may determine whether a quantity of times of sending the first request within one minute before a current moment exceeds 30. If more than 30, the Internet of Things device 300 may determine that the frequency of sending the first request meets the first anomaly rule. That is, sending the first request by the Internet of Things device 300 for the n-th time is an abnormal behavior. Further, the Internet of Things device 300 may perform step S3044. If the quantity of times is not more than 30, the Internet of Things device 300 may determine that the frequency of sending the first request does not meet the first anomaly rule. Further, the Internet of Things device 300 may perform step S3045. The n is a positive integer.

S3044: The Internet of Things device 300 discards the first request.

If determining that the frequency of sending the first request meets the first anomaly rule, the Internet of Things device 300 may discard the first request that needs to be sent this time.

It should be noted that, if the Internet of Things device 300 discards the first request that needs to be sent for the n-th time, the n-th time of the first request that needs to be sent is not counted in a quantity of times of sending the first request. Specifically, when the first request is sent for (n+1)-th time, the Internet of Things device 300 may determine whether a quantity of times of sending the first request within one minute before a current moment exceeds 30. In a case that a time interval between a time at which the Internet of Things device 300 is to send the first request for the n-th time and a time at which the Internet of Things device 300 is to send the first request for the (n+1)-th time is less than one minute, when determining whether a quantity of times of sending the first request within one minute before a current moment exceeds 30, the Internet of Things device 300 can skip counting the first request that needs to be sent for the n-th time.

S3045: The Internet of Things device 300 sends the first request to the Internet of Things cloud platform 200.

If the anomaly monitoring switch 301 is disabled, the Internet of Things device 300 may directly send the first request to the Internet of Things cloud platform 200 when the Internet of Things device 300 needs to send the first request to the Internet of Things cloud platform 200.

If the anomaly monitoring switch 301 is enabled, the Internet of Things device 300 may send the first request to the Internet of Things cloud platform 200 when determining that a frequency of sending the first request does not meet the first anomaly rule.

It can be learned from the foregoing method that when the anomaly monitoring switch 301 is enabled, the Internet of Things device 300 may perform anomaly monitoring. If the Internet of Things device 300 performs an abnormal behavior, for example, frequently sending the first request to the Internet of Things cloud platform 200, the Internet of Things device 300 may reduce a frequency of sending the first request. Specifically, the Internet of Things device 300 may limit, based on a frequency set in the first anomaly rule, the frequency of sending the first request to a range not higher than a frequency set in the first anomaly rule. In this way, not only consumption of software and hardware resources of the Internet of Things device 300 and the Internet of Things cloud platform 200 caused by frequent interaction between the Internet of Things device 300 and the Internet of Things cloud platform 200 can be reduced, but also the Internet of Things device 300 can continue to send the first request to implement a related function, thereby reducing impact of misjudgment of an abnormal behavior on function implementation of the Internet of Things device 300.

For an implementation of reducing a frequency of sending the login request in step S304 shown in FIG. 5, refer to the flowchart of the method shown in FIG. 6. To be specific, the first request in the method shown in FIG. 6 may be a login request sent by the Internet of Things device 300 to the Internet of Things cloud platform 200.

When reducing the frequency of sending the login request, the Internet of Things device 300 may send the login request at a relatively low frequency, for example, at a frequency of 20 times/minute. Specifically:
S305: The Internet of Things device 300 sends a login request to the Internet of Things cloud platform 200.

In this application, when the anomaly monitoring switch 301 is enabled, each time before sending a login request, the Internet of Things device 300 may perform a determining process in the method shown in FIG. 6, to determine whether to discard the login request that needs to be sent this time, or send the login request that needs to be sent this time to the Internet of Things cloud platform 200. In this way, the Internet of Things device 300 may control a frequency of sending the login request within a range that is not higher than the frequency set in the first anomaly rule, for example, 20 times/minute.

In some embodiments, the Internet of Things device 300 may no longer send the first request to the Internet of Things cloud platform 200 after detecting that a frequency of sending the first request (for example, a login request) exceeds a frequency set in the first anomaly rule. In other words, when the Internet of Things device 300 determines, based on the first anomaly rule stored in the erasable storage module, that sending the first request by the Internet of Things device 300 is an abnormal behavior, the Internet of Things device 300 may directly terminate the abnormal behavior. In this way, abnormal interaction may no longer be performed between the Internet of Things device 300 and the Internet of Things platform 200, thereby saving software and hardware resources of the Internet of Things device 300 and the Internet of Things cloud platform 200.

In some embodiments, after monitoring an anomaly, the Internet of Things device 300 may notify, through voice broadcast or different display lights, the user that the Internet of Things device 300 encounters an anomaly. For example, when monitoring the anomaly, in addition to performing the steps in the method shown in FIG. 5, the Internet of Things device 300 may play voice broadcast "A login anomaly occurs. Please reset the device". In this way, the Internet of Things device 300 may prompt the user that an anomaly occurs in the Internet of Things device 300, and provide a solution to the user. Specific content of the foregoing voice broadcast is not limited in this embodiment of this application. Alternatively, the Internet of Things device 300 without a voice output device (such as a speaker) may prompt the user that the Internet of Things device 300 encounters an anomaly by displaying a change in the color of a light. For example, a display light may be configured on the Internet of Things device 300. If the display light is green, it may indicate that the Internet of Things device 300 works normally. If the display light is red, it may indicate that the Internet of Things device 300 encounters an anomaly. The foregoing manner in which the user is prompted if an anomaly occurs is not limited in this embodiment of this application.

In the foregoing embodiment, because the electronic device 100 and the Internet of Things cloud platform 200 delete the user name and the password that are of the Internet of Things device 300 and that are used to log in to the Internet of Things cloud platform 200, but the user name and the password are not deleted on the Internet of Things device 300, the Internet of Things device 300 may frequently request login from the Internet of Things cloud platform 200. A specific solution to the foregoing anomaly may be performing a reset operation on the Internet of Things device 300. In this way, a user name and a password that are used to log in to the Internet of Things cloud platform 200 and that are in the Internet of Things device 300 may be deleted. In other words, the user may perform a user operation on a reset button of the Internet of Things device 300. When a reset succeeds, before obtaining a new user name and a new password used to log in to the Internet of Things cloud platform 200, the Internet of Things device 300 may no longer request to log in to the Internet of Things cloud platform 200.

When the anomaly monitoring switch 301 is enabled, the Internet of Things device 300 may perform anomaly monitoring. When determining that sending a login request is an abnormal behavior, the Internet of Things device 300 may reduce, according to the methods shown in FIG. 5 and FIG. 6, a frequency of sending the login request, to save software and hardware resources of the Internet of Things device 300 and the Internet of Things cloud platform 200. In addition, the Internet of Things device 300 may further play a voice broadcast "A login anomaly occurs. Please reset the device", to prompt the user to perform a reset operation on the Internet of Things device 300. In this way, the Internet of Things device 300 can eliminate the foregoing abnormal behavior.

Still with reference to an application scenario in which an Internet of Things device encounters an anomaly, the following specifically describes another device anomaly monitoring method provided in an embodiment of this application.

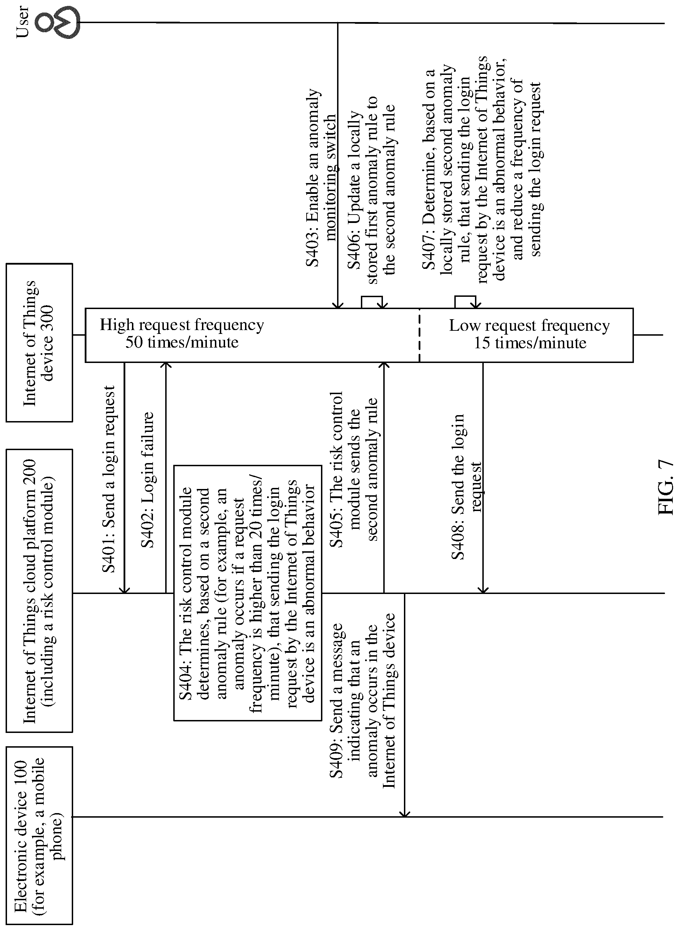

FIG. 7 shows a flowchart of a device anomaly monitoring method as an example. The method may include steps S401 to S409, where
the Internet of Things cloud platform 200 may be configured with a risk control module. A function of the risk control module may refer to a description in the foregoing embodiment. Details are not described herein again.

An abnormal behavior occurs in the Internet of Things device 300. Specifically, the abnormal behavior may be that the Internet of Things device 300 frequently sends a login request to the Internet of Things cloud platform 200. For a reason why the Internet of Things device 300 frequently sends the login request, refer to the foregoing embodiment. Details are not described herein again.

S401: The Internet of Things device 300 sends the login request to the Internet of Things cloud platform 200.

S402: The Internet of Things cloud platform 200 sends a message of login failure to the Internet of Things device 300.

When the anomaly monitoring switch 301 is disabled, due to the cause of an anomaly, the Internet of Things device 300 may frequently (for example, a frequency is 50 times/minute) request to log in to the Internet of Things cloud platform 200, and receive a message of login failure returned by the Internet of Things cloud platform 200 after sending the login request each time. This greatly consumes software and hardware resources of the Internet of Things device 300 and the Internet of Things cloud platform 200.

S403: The Internet of Things device 300 receives a user operation for enabling the anomaly monitoring switch 301.

The Internet of Things device 300 may enable the anomaly monitoring switch 301. The Internet of Things device 300 and the Internet of Things cloud platform 200 may interact with each other according to the method shown in FIG. 3. The Internet of Things cloud platform 200 may change a value of abnormal monitor field that indicates a status of the anomaly monitoring switch 301 to 1.

For the foregoing steps S401 to S403, refer to steps S301 to S303 in the method shown in FIG. 5. Details are not described herein again.

S404: The risk control module on the Internet of Things cloud platform 200 determines, based on a second anomaly rule (for example, an anomaly occurs if a request frequency is higher than 20 times/minute), that sending the login request by the Internet of Things device is an abnormal behavior.

The risk control module may generate an anomaly rule based on consumption of software and hardware resources of the Internet of Things cloud platform 200. When consumption of software and hardware resource of the Internet of Things cloud platform 200 is excessively high, for example, an excessively high CPU consumption in a computing resource may cause the Internet of Things cloud platform 200 to be stuck in the working process, which affects an operation of the Internet of Things cloud platform. When it is determined that consumption of software and hardware resources of the Internet of Things cloud platform 200 is higher, the risk control module may set a frequency in the anomaly rule to be slightly lower when generating an anomaly rule used for determining whether the Internet of Things device 300 encounters an anomaly. In this way, the Internet of Things device 300 may control, based on an updated anomaly rule, a frequency of sending the login request within a lower range, thereby better saving software and hardware resources of the Internet of Things cloud platform 200 and the Internet of Things device 300. When it is determined that consumption of software and hardware resources of the Internet of Things cloud platform 200 is relatively low, the risk control module may set a frequency in the anomaly rule to be slightly higher when the anomaly rule used for determining whether the Internet of Things device 300 encounters an anomaly.

In other words, when consumption of software and hardware resources of the Internet of Things cloud platform 200 is higher, fewer software and hardware resources that can be used to process a request that an abnormal behavior may occur in the Internet of Things device 300 are on the Internet of Things cloud platform 200, and the risk control module may set an anomaly rule with a higher requirement. When consumption of software and hardware resources of the Internet of Things cloud platform 200 is lower, more software and hardware resources that can be used to process a request that an abnormal behavior may occur in the Internet of Things device 300 are on the Internet of Things cloud platform 200, and the risk control module may set an anomaly rule with a lower requirement.

For example, when the Internet of Things device 300 encounters an anomaly and frequently sends a login request to the Internet of Things cloud platform 200, consumption of current software and hardware resources of the Internet of Things cloud platform 200 is relatively high. The risk control module may generate a second anomaly rule based on a current consumption of software and hardware resources of the Internet of Things cloud platform 200. The second anomaly rule may be specifically as follows: If a frequency of sending the login request by the Internet of Things device 300 is higher than 20 times/minute, a behavior of sending the login request is an abnormal behavior.

The risk control module may record a time at which the Internet of Things cloud platform 200 receives the login request sent by the Internet of Things device 300 each time. Further, the risk control module may determine whether a frequency at which the Internet of Things device 300 sends the login request exceeds a frequency set in the second anomaly rule.

Before the risk control module sends the second anomaly rule to the Internet of Things device 300, the Internet of Things device 300 may determine, by using the first anomaly rule stored in the erasable storage module, whether the Internet of Things device 300 has an abnormal behavior. Because the second anomaly rule has a higher requirement than the first anomaly rule, the risk control module may first determine, compared with the Internet of Things device 300, that the behavior of sending the login request is an abnormal behavior. For example, when the Internet of Things device 300 has sent 30 login requests to the Internet of Things cloud platform 200 in less than one minute, the risk control module may determine that the behavior of sending the login request is an abnormal behavior. However, the Internet of Things device 300 determines, based on the first anomaly rule, that the behavior of sending the login request is not an abnormal behavior. The Internet of Things device 300 may continue to send the login request.

It should be noted that the risk control module on the Internet of Things cloud platform 200 may identify which Internet of Things device 300 the request received by the Internet of Things cloud platform 200 is specifically from. For example, each Internet of Things device may add a device identifier to a request when sending the request. The device identifier may be used to uniquely identify the Internet of Things device. In this way, the risk control module can identify the Internet of Things device according to the device identifier in the request. Further, the risk control module may record a time at which the Internet of Things device sends a same request, to determine whether a frequency at which the Internet of Things device sends the same request meets the anomaly rule.

When the risk control module determines that the behavior of sending the login request is an abnormal behavior, the Internet of Things device 300 may perform step S405.

S405: The risk control module on the Internet of Things cloud platform 200 sends the second anomaly rule to the Internet of Things device 300.

In this application, the risk control module may send the second anomaly rule to a communication module on the Internet of Things cloud platform 200. The communication module may send the second anomaly rule to the Internet of Things device 300 by using a first interface connected to the Internet of Things cloud platform 200 and the Internet of Things device 300.

S406: The Internet of Things device 300 updates a locally stored first anomaly rule to the second anomaly rule.

When receiving the second anomaly rule from the Internet of Things cloud platform 200, the Internet of Things device 300 may erase the first anomaly rule stored in the erasable storage module, and store the second anomaly rule in the erasable storage module.

S407: The Internet of Things device 300 determines, based on a locally stored second anomaly rule, that sending the login request by the Internet of Things device 300 is an abnormal behavior, and reduces a frequency of sending the login request.

For a specific implementation process of step S407, refer to step S304 in the method shown in FIG. 5. Details are not described herein again.

For example, the Internet of Things device 300 may reduce, based on the second anomaly rule, the frequency of sending the login request to a range within 20 times/minute, for example, 15 times/minute.

In this application, when determining that an abnormal behavior occurs in the Internet of Things device 300, the Internet of Things device may notify the user that the Internet of Things device 300 encounters an anomaly through voice broadcast or different display lights. For details about the foregoing prompting manner, refer to the description in the foregoing embodiment. Details are not described herein again.

S408: The Internet of Things device 300 sends the login request to the Internet of Things cloud platform 200.

In this application, when the anomaly monitoring switch 301 is enabled, each time before sending a login request, the Internet of Things device 300 may perform a determining process in the method shown in FIG. 6, to determine whether to discard the login request that needs to be sent this time, or send the login request that needs to be sent this time to the Internet of Things cloud platform 200. In this way, the Internet of Things device 300 may control a frequency of sending the login request within a range that is not higher than a frequency set in the second anomaly rule, for example, 15 times/minute.

S409: The Internet of Things cloud platform 200 sends a message indicating that an anomaly occurs in the Internet of Things device 300 to the electronic device 100.

When the risk control module determines that the Internet of Things device 300 encounters an anomaly, the Internet of Things cloud platform 200 may send, to the electronic device 100, a message indicating that the Internet of Things device 300 encounters an anomaly.

When receiving the foregoing message of the Internet of Things cloud platform 200, the electronic device 100 may display a related message notification, to notify the user that the Internet of Things device 300 encounters an anomaly, and provide a corresponding anomaly solution for the user.

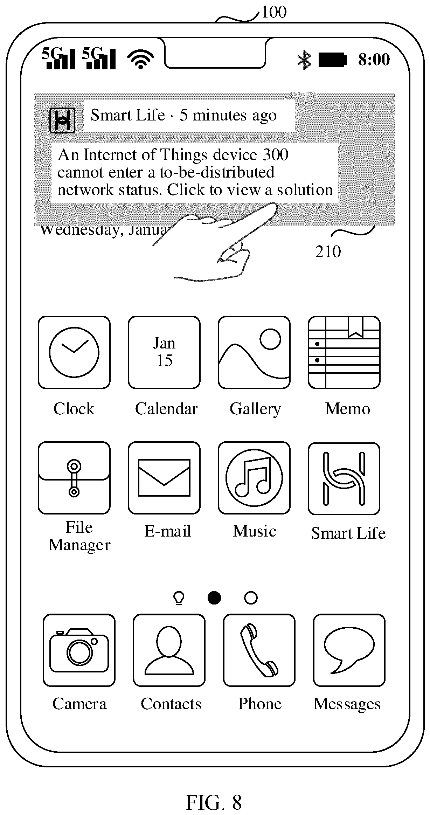

For example, the electronic device 100 (such as a mobile phone) may display a user interface shown in FIG. 8.

As shown in FIG. 8, the user interface may include a message notification 210. The message notification may be a message notification from an Internet of Things app, for example, a "Smart Life" application. The message notification 210 may include a prompt "The Internet of Things device 300 cannot enter a to-be-distributed network status. Click to view a solution". In response to a user operation acting on the message notification 210, for example, a touch operation, the electronic device 100 may display a user interface including a solution used to resolve an anomaly of the Internet of Things device 300. The solution may be, for example: Reset the Internet of Things device 300. Specifically, the solution may be different based on different anomalies. For example, the solution can also be: Check the network connection. Alternatively, disconnect the network, wait for one minute, and try again. Alternatively, dial the customer service phone, log in to a related website to query more detailed solutions, or the like. Specific content of the foregoing solution is not limited in this embodiment of this application.

In other words, the user may learn, by viewing the electronic device 100, that the Internet of Things device 300 encounters an anomaly, and resolves the anomaly of the Internet of Things device 300 according to the foregoing solution. Before the user resolves the anomaly of the Internet of Things device 300 according to the solution, the Internet of Things device 300 may detect the anomaly based on the anomaly rule, and reduce a frequency of an abnormal behavior (for example, reducing a frequency of sending a login request), thereby saving software and hardware resources of the Internet of Things device 300 and the Internet of Things cloud platform 200.

A sequence of the foregoing steps S409 and S405 is not limited in this application.

In some embodiments, when sending the anomaly rule to the Internet of Things device 300, the risk control module may send different anomaly rules by using different interfaces.

For example, the Internet of Things cloud platform 200 and the Internet of Things device 300 may interact through a first interface. The first interface may include a plurality of interfaces. The plurality of interfaces may be used for data interaction of different function performed by the Internet of Things cloud platform 200 and the Internet of Things device 300. For example, the Internet of Things device 300 may send a login request to the Internet of Things cloud platform 200 through one of the interfaces, and receive, by using the same interface, a message indicating a login failure or a login success from the Internet of Things cloud platform 200. The Internet of Things cloud platform 200 may send a turn-on control instruction to the Internet of Things device 300 through another interface, and receive, through the another interface, a message indicating a turn-on success from the Internet of Things device 300.

In this case, an anomaly rule used for determining whether different interaction behaviors are abnormal behaviors may be sent by the Internet of Things cloud platform 200 to the Internet of Things device 300 through an interface used for performing the interaction behavior. For example, the second anomaly rule used for determining whether the behavior of sending the login request by the Internet of Things device 300 is an abnormal behavior, may be delivered by the Internet of Things cloud platform 200 to the Internet of Things device 300 through an interface used for receiving the login request from the Internet of Things device 300. The Internet of Things device 300 may monitor, by using a received second anomaly rule through the interface, whether the behavior of sending the login request is an abnormal behavior.

In some embodiments, the risk control module may generate an anomaly rule at intervals of a preset time period based on consumption of software and hardware resources of the Internet of Things cloud platform 200. The preset time period may be one day, two days, or the like. A specific length of the preset time period is not limited in this embodiment of this application. The risk control module may send a new anomaly rule to the Internet of Things device 300 after generating an anomaly rule at intervals of a preset time period. The Internet of Things device 300 may update a locally stored anomaly rule. In this way, an anomaly rule used by the Internet of Things device 300 to determine whether an anomaly occurs can better adapt to a consumption status of software and hardware resources of the Internet of Things cloud platform 200.

In some embodiments, when the Internet of Things cloud platform 200 receives a request or a message sent by the Internet of Things device 300, the risk control module may generate an anomaly rule based on consumption of software and hardware resources of the Internet of Things cloud platform 200, and further use the foregoing generated anomaly rule to determine whether the Internet of Things device 300 encounters an anomaly.

In some embodiments, an anomaly rule generated by the risk control module based on consumption of software and hardware resources of the Internet of Things cloud platform 200 may have a lower requirement than an anomaly rule locally stored in the Internet of Things device 300. In other words, the Internet of Things device 300 may first determine, compared with the risk control module, that a behavior of sending a request by the Internet of Things device 300 is an abnormal behavior. In this case, the risk control module may skip sending a generated anomaly rule to the Internet of Things device 300.

For example, in the foregoing embodiment, when the Internet of Things device 300 encounters an anomaly and frequently sends a login request to the Internet of Things cloud platform 200, consumption of current software and hardware resources of the Internet of Things cloud platform 200 is relatively low. The second anomaly rule generated by the risk control module may be as follows: If a frequency of sending a login request by the Internet of Things device 300 is higher than 40 times/minute, the behavior of sending the login request is an abnormal behavior. The first anomaly rule locally stored in the Internet of Things device 300 may be as follows: If a frequency of sending a login request by the Internet of Things device 300 is higher than 30 times/minute, the behavior of sending the login request is an abnormal behavior.

When the Internet of Things device 300 has sent 35 login requests to the Internet of Things cloud platform 200 in less than one minute, the risk control module determines, based on the second anomaly rule, that the behavior of sending the login request is not an abnormal behavior. The Internet of Things device 300 may determine that the behavior of sending the login request is an abnormal behavior. Further, the Internet of Things device 300 may reduce, based on the first anomaly rule, the frequency of sending the login request. For example, the Internet of Things device 300 sends the login request to the Internet of Things cloud platform at a frequency of 20 times/minute. When the frequency of sending the login request is 20 times/minute, both the Internet of Things device 300 and the risk control module may determine that the behavior of sending the login request is not an abnormal behavior. In this way, the risk control module may not want the Internet of Things device 30 to send the second anomaly rule.

Content that is based on for the risk control module to generate the anomaly rule is not limited in this embodiment of this application. In addition to the consumption of software and hardware resources of the Internet of Things cloud platform, the risk control module may generate an anomaly rule based on factors such as current network quality of the Internet of Things cloud platform.

It can be learned from the foregoing method that an anomaly rule that is in the Internet of Things device and that is used to determine whether the Internet of Things device encounters an anomaly may be changeable. When the Internet of Things cloud platform includes a risk control module, the risk control module may generate an anomaly rule based on factors such as consumption of software and hardware resources of the Internet of Things cloud platform, and send the new anomaly rule to the Internet of Things device. The Internet of Things device may update the locally stored anomaly rule, and determine, by using a new anomaly rule, whether the Internet of Things device encounters an anomaly. In this way, when frequently sending the first request, the Internet of Things device may adjust, based on consumption of software and hardware resources of the Internet of Things cloud platform, a frequency of sending the first request, thereby saving software and hardware resources of the Internet of Things device and the Internet of Things cloud platform, and improving reliability of an entire Internet of Things system.

In addition, when the risk control module monitors the Internet of Things device encountering an anomaly, the Internet of Things cloud platform may send, to the electronic device, a message indicating that the Internet of Things device encounters an anomaly, to notify the user that the Internet of Things device encounters an anomaly, and provide a solution for resolving the anomaly for the user. This can help eliminate an anomaly that occurs on the Internet of Things device.

With reference to an application scenario in which an Internet of Things cloud platform encounters an anomaly, the following specifically describes a device anomaly monitoring method provided in an embodiment of this application.

An abnormal behavior occurs on the Internet of Things cloud platform 200. Specifically, the abnormal behavior may be that the Internet of Things cloud platform 200 frequently sends a control command to the Internet of Things device 300. For example, a turn-on control command and a turn-off control command. A reason why the abnormal behavior occurs may be that an infinite loop occurs in the control rule of the Internet of Things cloud platform 200 mentioned in the foregoing embodiment. The turn-on control instruction triggers the Internet of Things cloud platform 200 to send a turn-off control instruction. The turn-off control instruction triggers the Internet of Things cloud platform 200 to send a turn-on control instruction. For example, the Internet of Things device 300 is a smart light. When the foregoing abnormal behavior occurs on the Internet of Things cloud platform 200, the smart light responds to the foregoing abnormal control instruction, and is frequently turned on and off. This greatly consumes software and hardware resources of Internet of Things devices and Internet of Things cloud platforms.

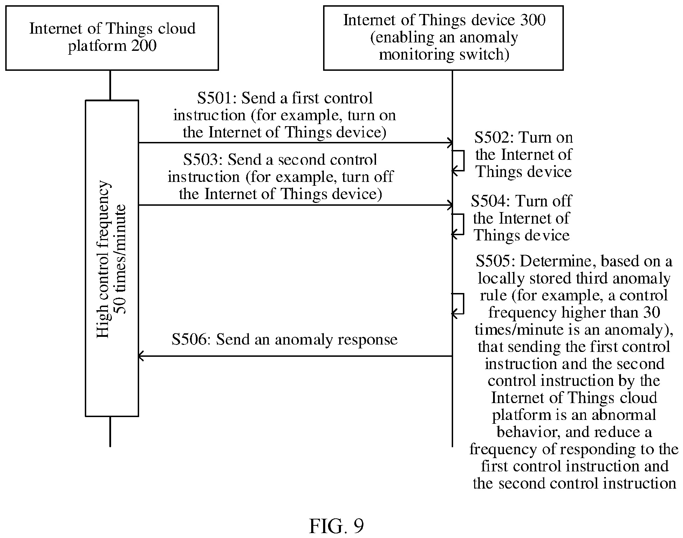

FIG. 9 shows a flowchart of a device anomaly monitoring method as an example. The method may include steps S501 to S506, where
the anomaly monitoring switch 301 of the Internet of Things device 300 is enabled.

S501: The Internet of Things cloud platform 200 sends a first control instruction to the Internet of Things device 300.

The first control instruction may be a control instruction for turning on the Internet of Things device.

S502: Turn on the Internet of Things device 300.

In response to the first control instruction, the Internet of Things device 300 is turned on.

S503: The Internet of Things cloud platform 200 sends a second control instruction to the Internet of Things device 300.

The second control instruction may be a control instruction for turning off the Internet of Things device. Because of an infinite loop of the control rule, the first control instruction may trigger the Internet of Things cloud platform 200 to send the second control instruction.

S504: Turn off the Internet of Things device 300.

In response to the second control instruction, the Internet of Things device 300 is turned off. It should be noted that, the Internet of Things device 300 is turned off to indicate that the Internet of Things device 300 is in a standby state, for example, a main processor of the Internet of Things device 300 sleeps. When the Internet of Things device 300 is in the standby state, the Internet of Things device 300 may still receive and identify the first control instruction for turning on the Internet of Things device 300. The Internet of Things device 300 in the standby state may enter a working state when receiving the foregoing first control instruction, for example, waking up the main processor of the Internet of Things device 300.

In addition, in this application, a module configured to perform anomaly monitoring may be integrated into a low-power-consumption processor. When the anomaly monitoring switch 301 is enabled, the module configured to perform anomaly monitoring may detect, in real time, whether the Internet of Things device or the Internet of Things cloud platform has an abnormal behavior. In other words, when the Internet of Things device is in the standby state, the low-power-consumption processor integrated with the module configured to perform anomaly monitoring may still be in the working state.

Further, the second control instruction may trigger the Internet of Things cloud platform 200 to send the first control instruction. It can be learned that, the Internet of Things cloud platform 200 frequently sends control instructions (the first control instruction and the second control instruction) to the Internet of Things device 300. For example, a frequency at which the Internet of Things cloud platform 200 sends a control instruction may be 50 times/minute. This greatly consumes software and hardware resources of the Internet of Things cloud platform 200 and the Internet of Things device 300.

S505: The Internet of Things device determines, based on a locally stored third anomaly rule (for example, a control frequency higher than 30 times/minute is an anomaly), that sending control instructions (including the first control instruction and the second control instruction) by the Internet of Things cloud platform 200 is an abnormal behavior, and reduces a frequency of responding to the first control instruction and the second control instruction.

When the anomaly monitoring switch 301 is enabled, the Internet of Things device 300 may record a quantity of times of receiving a control command from the Internet of Things cloud platform 200, and compare a frequency of receiving the control command with a third anomaly rule. If determining that the frequency of receiving the control command is higher than a frequency set in the third anomaly rule, the Internet of Things device 300 may determine that sending the control command by the Internet of Things cloud platform is an abnormal behavior, and further reduce the frequency of responding to the control instruction.

A specific value of the frequency set in the third anomaly rule is not limited in this embodiment of this application.

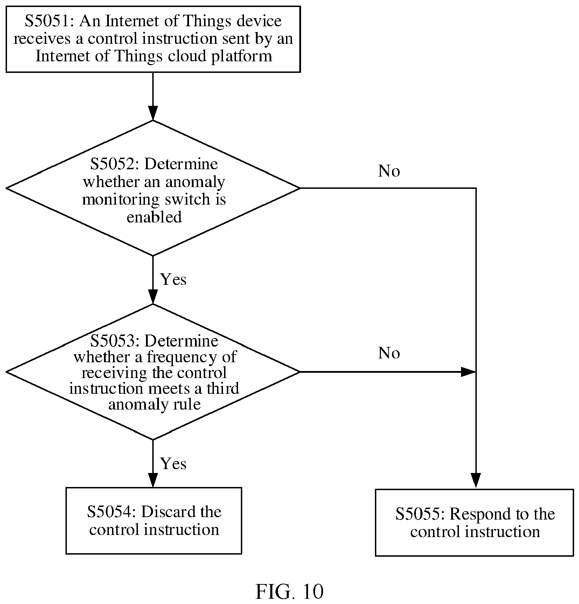

In a possible implementation, the Internet of Things device 300 may perform anomaly monitoring according to a flowchart of the method shown in FIG. 10, and reduce a frequency of responding to a control instruction.

As shown in FIG. 10, the method may include steps S5051 to S5055.

S5051: The Internet of Things device 300 receives the control instruction sent by the Internet of Things cloud platform 200.

The control instruction may include the first control instruction for turning on the Internet of Things device 300 in step S501 and the second control instruction for turning off the Internet of Things device 300 in step S503.

The control instruction may also be another type of instruction, for example, a control instruction of volume adjustment or a control instruction of brightness adjustment. Specific content of the foregoing control instruction is not limited in this embodiment of this application.

S5052: The Internet of Things device 300 determines whether the anomaly monitoring switch 301 is enabled.

Before responding to the control instruction sent by the Internet of Things cloud platform 200, the Internet of Things device 300 may perform anomaly monitoring, to determine whether the control instruction sent by the Internet of Things cloud platform 200 is an abnormal behavior.

Specifically, the Internet of Things device 300 may first determine whether the anomaly monitoring switch 301 is enabled, where
if the anomaly monitoring switch 301 is enabled, the Internet of Things device 300 may perform anomaly monitoring. Specifically, the Internet of Things device 300 may further perform step S5053.

If the anomaly monitoring switch 301 is disabled, the Internet of Things device 300 skips performing anomaly monitoring. Specifically, the Internet of Things device 300 may further perform step S5055.

For a specific manner in which the Internet of Things device 300 determines whether the anomaly monitoring switch is enabled, refer to step S3042 in the method shown in FIG. 6. Details are not described herein again.

S5053: The Internet of Things device 300 determines whether a frequency of receiving the control instruction meets the third anomaly rule.

The third anomaly rule may be preset before the Internet of Things device 300 is delivered from a factory. For example, the third anomaly rule may be as follows: If a frequency of receiving a control instruction (for example, the first control instruction and the second control instruction) by the Internet of Things device 300 is higher than 30 times/minute, the Internet of Things device 300 may determine that sending the control instructions by the Internet of Things cloud platform 200 is an abnormal behavior.

Further, the Internet of Things device 300 may perform step S5054.

If the Internet of Things device 300 determines that the frequency of receiving the control instruction does not meet the third anomaly rule, that is, the frequency of receiving the control instruction does not exceed the frequency set in the third anomaly rule, the Internet of Things device 300 may perform step S5055.

For a specific method for determining, by the Internet of Things device 300, whether the frequency of receiving the control instruction meets the third anomaly rule, refer to the specific method for determining, by the Internet of Things device 300, whether the frequency of sending the first request meets the first anomaly rule in the foregoing embodiment. Details are not described herein again.

S5054: The Internet of Things device 300 discards the control instruction.

If determining that the frequency of receiving the control instruction meets the third anomaly rule, the Internet of Things device 300 may discard the control instruction received this time. For example, the Internet of Things device 300 is turned on, and the anomaly monitoring switch 301 is enabled. When receiving the second control instruction, the Internet of Things device 300 may determine whether a frequency of receiving the first control instruction and the second control instruction meets the third anomaly rule. If yes, the Internet of Things device 300 may discard a second control instruction received this time. To be specific, the Internet of Things device 300 skips responding to the second control instruction received this time, skips turning off the Internet of Things device 300, and still maintains a turn-on state.

S5055: The Internet of Things device 300 responds to the control instruction.

If the anomaly monitoring switch 301 is disabled, the Internet of Things device 300 may directly respond to the control instruction when receiving the control instruction sent by the Internet of Things cloud platform 200.

If the anomaly monitoring switch 301 is enabled, the Internet of Things device 300 may respond to the control instruction when determining that a frequency at which the control request is received does not meet the third anomaly rule.

It can be learned from the foregoing method that when the anomaly monitoring switch 301 is enabled, the Internet of Things device 300 may perform anomaly monitoring. If the Internet of Things cloud platform 200 performs an abnormal behavior, for example, frequently sending a control instruction to the Internet of Things device 300, the Internet of Things device 300 may reduce a frequency of responding to the control instruction. Specifically, the Internet of Things device 300 may limit, based on the frequency set in the third anomaly rule, the frequency of responding to the control instruction to a range not higher than a frequency set in the third anomaly rule. In this way, consumption of software and hardware resources of the Internet of Things device 300 caused by the Internet of Things device 300 frequently responding to the control instruction of the Internet of Things cloud platform 200 can be reduced, and the Internet of Things device 300 can further maintain a relatively low frequency to respond to the control instruction, thereby reducing impact of misjudgment of an abnormal behavior on function implementation of the Internet of Things device 300.

For an implementation of reducing a frequency of responding to the first control instruction and the second control instruction in step S505 shown in FIG. 9, refer to the foregoing flowchart of the method shown in FIG. 10. To be specific, the control instruction in the method shown in FIG. 10 may be the first control instruction and the second control instruction that are sent by the Internet of Things cloud platform 200 to the Internet of Things device 300.

When determining that sending the first control instruction and the second control instruction by the Internet of Things cloud platform 200 is an abnormal behavior, in addition to reducing a frequency of responding to the control instruction, the Internet of Things device 300 may further send an anomaly response to the Internet of Things cloud platform 200. Specifically:

S506: The Internet of Things device 300 sends the anomaly response to the Internet of Things cloud platform 200.

The anomaly response may be used to prompt that a behavior of sending the first control instruction and the second control instruction by the Internet of Things cloud platform 100 is an abnormal behavior.

In this application, when determining that the frequency of receiving the control instruction meets the third anomaly rule, the Internet of Things device 300 may prompt, through voice broadcast or different display lights, the user that the Internet of Things device 300 receives anomaly control. For example, when determining that sending the control instruction by the Internet of Things cloud platform 200 is an abnormal behavior, in addition to performing the steps of the method shown in FIG. 9, the Internet of Things device 300 may play a voice broadcast "being controlled by an anomaly, please temporarily disconnect the network connection". In this way, the Internet of Things device 300 may prompt the user that the Internet of Things device 300 is under anomaly control, and provide a solution for the user. The foregoing manner in which the user is prompted if an anomaly occurs is not limited in this embodiment of this application.

In a possible implementation, a flow control mechanism is set on the Internet of Things cloud platform 200, and the flow control mechanism does not encounter an anomaly. The Internet of Things cloud platform 200 may control, based on a flow control mechanism, a frequency of sending the control instruction to the Internet of Things device 300. In this way, when an anomaly such as an infinite loop of a control rule occurs on the Internet of Things cloud platform 200, the Internet of Things cloud platform 200 may reduce a frequency of sending a control instruction, thereby saving software and hardware resources of the Internet of Things cloud platform and the Internet of Things device.

If the foregoing flow control mechanism also encounters an anomaly, the Internet of Things cloud platform may not be able to control, based on the foregoing flow control mechanism, a frequency of delivering a control instruction, and software and hardware resources of both the Internet of Things device and the Internet of Things cloud platform are greatly consumed. However, with reference to the methods shown in FIG. 9 and FIG. 10 in this application, the Internet of Things device may monitor, based on a locally stored anomaly rule, that an anomaly occurs on the Internet of Things cloud platform, thereby reducing a frequency of responding to a control instruction for an anomaly from the Internet of Things cloud platform. In this way, the Internet of Things device can reduce consumption of software and hardware resources due to the Internet of Things device frequently responding to an abnormal control instruction.

In the methods shown in FIG. 9 and FIG. 10, the Internet of Things device may monitor, based on a locally stored anomaly rule, whether an anomaly occurs on the Internet of Things cloud platform. The anomaly rule locally stored in the Internet of Things device may be updated.

Still with reference to an application scenario in which an Internet of Things cloud platform encounters an anomaly, the following specifically describes another device anomaly monitoring method provided in an embodiment of this application.

The Internet of Things cloud platform 200 may be configured with a risk control module. A function of the risk control module may refer to a description in the foregoing embodiment. Details are not described herein again.

An abnormal behavior occurs on the Internet of Things cloud platform 200. Specifically, the abnormal behavior may be that the Internet of Things cloud platform 200 frequently sends, to the Internet of Things device 300, a first turn-on control instruction and a turn-off second control instruction. For a reason why the Internet of Things cloud platform 200 frequently sends a control instruction, refer to the foregoing embodiment. Details are not described herein again.

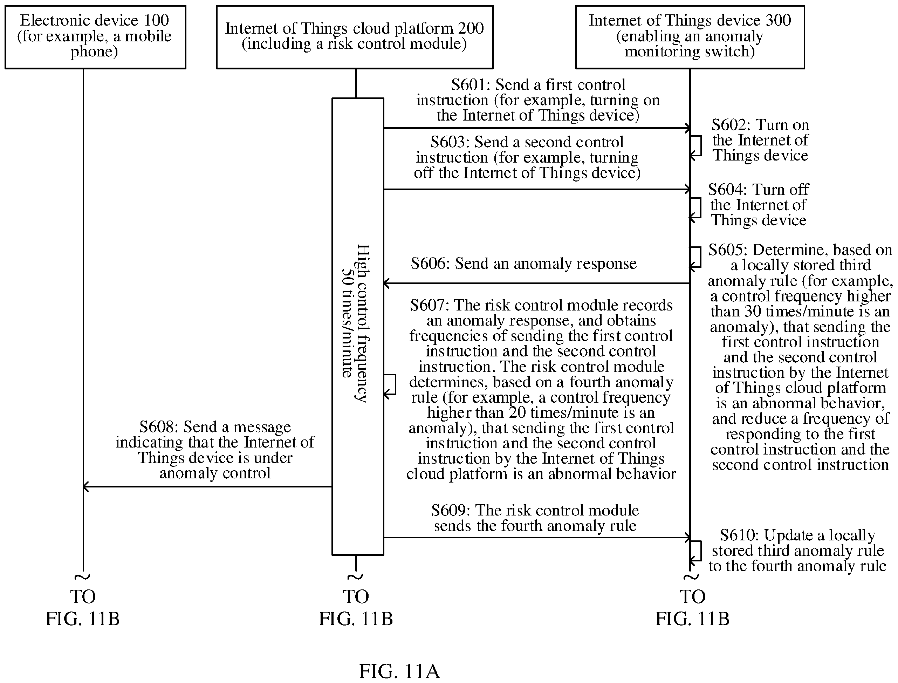

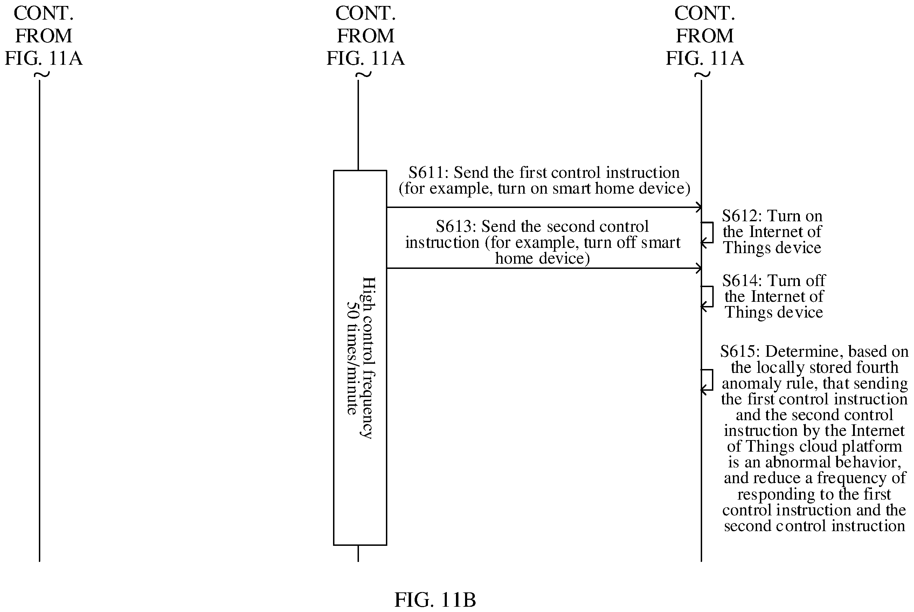

FIG. 11A and FIG. 11B show a flowchart of a device anomaly monitoring method as an example. The method may include steps S601 to S615, where
the anomaly monitoring switch 301 of the Internet of Things device 300 is enabled.

S601: The Internet of Things cloud platform 200 sends the first control instruction to the Internet of Things device 300.

The first control instruction may be a control instruction for turning on the Internet of Things device 300.

S602: Turn on the Internet of Things device 300.

S603: The Internet of Things cloud platform 200 sends the second control instruction to the Internet of Things device 300.

The second control instruction may be a control instruction for turning off the Internet of Things device 300.

S604: Turn off the Internet of Things device 300.

S605: The Internet of Things device 300 determines, based on a locally stored third anomaly rule (for example, a control frequency higher than 30 times/minute is an anomaly), that sending control instructions (including the first control instruction and the second control instruction) by the Internet of Things cloud platform 200 is an abnormal behavior, and reduces a frequency of responding to the first control instruction and the second control instruction.

Because the anomaly monitoring switch 301 is enabled, in the process of sending the first control instruction in step S601 and sending the second control instruction in step S603, the Internet of Things device 300 may perform anomaly monitoring. Specifically, when determining, based on the third anomaly rule, that a frequency of receiving the first control instruction and the second control instruction exceeds a frequency set in the third anomaly rule, the Internet of Things device 300 may reduce a frequency of responding to the first control instruction and the second control instruction according to the method shown in FIG. 10. A method for reducing the foregoing response frequency is not described herein again.

In this application, when determining that the received first control instruction or second control instruction is an abnormal control instruction, the Internet of Things device 300 may further prompt, through voice broadcast, different display lights, or the like, the user that the Internet of Things device 300 is under abnormal control. A specific manner of prompting, by the Internet of Things device 300, that the user equipment is under anomaly control is not limited in this embodiment of this application.

S606: The Internet of Things device 300 sends the anomaly response to the Internet of Things cloud platform 200.

When detecting that an anomaly occurs on the Internet of Things cloud platform 200, the Internet of Things device 300 may send, to the Internet of Things cloud platform 200, an anomaly response used to indicate that sending the control instruction by the Internet of Things cloud platform 200 is an abnormal behavior.

For a specific implementation process of the foregoing steps S601 to S606, refer to the method shown in FIG. 9. Details are not described herein again.

S607: The risk control module on the Internet of Things cloud platform 200 records an anomaly response, and obtains frequencies of sending the first control instruction and the second control instruction. The risk control module determines, based on a fourth anomaly rule (for example, a control frequency higher than 20 times/minute is an anomaly), that sending the first control instruction and the second control instruction by the Internet of Things cloud platform is an abnormal behavior.

When the Internet of Things cloud platform 200 receives an anomaly response from the Internet of Things device 300, the risk control module may record the anomaly response. The risk control module may generate an anomaly rule based on consumption of software and hardware resources of the Internet of Things cloud platform 200. For example, the risk control module may generate a fourth anomaly rule: If a frequency of sending the first control instruction and the second control instruction by the Internet of Things cloud platform is higher than 20 times/minute, a behavior of sending the first control instruction and the second control instruction is an abnormal behavior. For an implementation in which the risk control module generates an anomaly rule, refer to step S404 in the method shown in FIG. 7. Details are not described herein again.

In addition, the risk control module may obtain a frequency at which the Internet of Things cloud platform 200 sends the first control instruction and the second control instruction. With reference to a generated fourth anomaly rule, the risk control module may analyze whether a behavior of sending the first control instruction and the second control instruction by the Internet of Things cloud platform is an abnormal behavior.

If it is determined, based on the fourth anomaly rule, that a behavior of sending the first control instruction and the second control instruction is an abnormal behavior, the Internet of Things cloud platform 200 may perform step S608 and step S609.

S608: The Internet of Things cloud platform 200 sends a message indicating that the Internet of Things device 300 is under abnormal control to the electronic device 100.

When receiving the foregoing message of the Internet of Things cloud platform 200, the electronic device 100 may display a related message notification, to notify that the Internet of Things device 300 encounters is under anomaly control, and provide a corresponding anomaly solution for the user. For example, the message notification displayed by the electronic device 100 may include a prompt "The Internet of Things device 300 is under anomaly control, and please temporarily disconnect from the network". Specific content of the prompt in the message notification is not limited in this application.

In other words, the user may learn, by viewing the electronic device 100, that the Internet of Things device 300 is under anomaly control, and stop, based on the solution, the Internet of Things device 300 from being under anomaly control. Before the user stops, based on the solution, the Internet of Things device 300 from being under anomaly control, the Internet of Things device 300 may determine and monitor an anomaly based on the anomaly rule, and reduce a frequency of responding to an anomaly control instruction (for example, the first control instruction and the second control instruction), thereby saving software and hardware resources of the Internet of Things device 300.

S609: The risk control module on the Internet of Things cloud platform 200 sends a fourth anomaly rule to the Internet of Things device 300.

In this application, the risk control module may send the fourth anomaly rule to a communication module on the Internet of Things cloud platform 200. The communication module may send the fourth anomaly rule to the Internet of Things device 300 by using a first interface connected to the Internet of Things cloud platform 200 and the Internet of Things device 300.

S610: The Internet of Things device 300 updates a locally stored third anomaly rule to the fourth anomaly rule.

When receiving the fourth anomaly rule from the Internet of Things cloud platform 200, the Internet of Things device 300 may erase the third anomaly rule stored in the erasable storage module, and store the fourth anomaly rule in the erasable storage module.

In a possible implementation, when receiving an anomaly response from the Internet of Things device 300, a console of the Internet of Things cloud platform 200 may display the anomaly response, to notify related management personnel that the Internet of Things cloud platform 200 encounters an anomaly. In this way, when an infinite loop occurs in a control rule of the Internet of Things cloud platform, a flow control mechanism encounters an anomaly or is maliciously controlled, or the like, the Internet of Things cloud platform may frequently deliver a control instruction to the Internet of Things device. When the foregoing problems need to be resolved by related management personnel, the Internet of Things cloud platform can notify the related management personnel through the console after receiving an anomaly response. Further, the related management personnel can resolve an anomaly that occurs on the Internet of Things cloud platform.

The console of the Internet of Things cloud platform 200 may be used by related management personnel to log in to, and manage the Internet of Things cloud platform 200 and process an anomaly that occurs on the Internet of Things cloud platform.

S611: The Internet of Things cloud platform 200 sends the first control instruction to the Internet of Things device 300.

The first control instruction may be a control instruction for turning on the Internet of Things device 300.

S612: Turn on the Internet of Things device 300.

S613: The Internet of Things cloud platform 200 sends the second control instruction to the Internet of Things device 300.

The second control instruction may be a control instruction for turning off the Internet of Things device 300.

S614: Turn off the Internet of Things device 300.

Before the related management personnel of the Internet of Things cloud platform 200 resolve the foregoing anomaly, or when the foregoing anomaly occurs again on the Internet of Things cloud platform after the foregoing anomaly of the Internet of Things cloud platform 200 has been resolved, the Internet of Things cloud platform 200 frequently sends the first control instruction in step S611 and the second control instruction in step S613 to the Internet of Things device 300. That is, an abnormal control instruction received by the Internet of Things device 300.

S615: The Internet of Things device 300 determines, based on a locally stored fourth anomaly rule, that sending the first control instruction and the second control instruction by the Internet of Things cloud platform 200 is an abnormal behavior, and reduces a frequency of responding to the first control instruction and the second control instruction.

It can be learned from the foregoing step S610 that the anomaly rule that is in the Internet of Things device 300 and that is used for determining whether a behavior of sending the first control instruction and the second control instruction by the Internet of Things cloud platform 200 is an abnormal behavior is updated from a third anomaly rule to a fourth anomaly rule.

When the anomaly monitoring switch 301 of the Internet of Things device 300 is enabled, the Internet of Things device 300 may record a quantity of times of receiving first control instruction and second control instruction, and compare a frequency of receiving the first control instruction and the second control instruction with a frequency set in the fourth anomaly rule. When determining that a frequency of receiving the first control instruction and the second control instruction is higher than a frequency set in the fourth anomaly rule, the Internet of Things device 300 may reduce a frequency of responding to the first control instruction and the second control instruction based on the method described in FIG. 10.

In addition, when determining that a behavior of sending the first control instruction and the second control instruction by the Internet of Things cloud platform 200 is an abnormal behavior, the Internet of Things device 300 may further send an anomaly response to the Internet of Things cloud platform 200, to notify the Internet of Things cloud platform 200 that an anomaly occurs.

It can be learned from the method in FIG. 11A and FIG. 11B, that an anomaly rule that is in the Internet of Things device and that is used for determining whether the Internet of Things cloud platform encounters an anomaly may be changeable. When the Internet of Things cloud platform includes a risk control module, the risk control module may generate an anomaly rule based on factors such as consumption of software and hardware resources of the Internet of Things cloud platform, and send the new anomaly rule to the Internet of Things device. The Internet of Things device may update a locally stored anomaly rule, and determine, by using a new anomaly rule, whether the Internet of Things cloud platform encounters an anomaly. In this way, when frequently receiving an abnormal control instruction, for example, the first control instruction for turning on the Internet of Things device and the second control instruction for turning off the Internet of Things device, the Internet of Things device may reduce a frequency of responding to the foregoing abnormal control instruction. The foregoing method can save software and hardware resources of the Internet of Things device.

In addition, when the risk control module determines, based on a received anomaly response and an anomaly rule, that an abnormal behavior occurs on the Internet of Things cloud platform, the Internet of Things cloud platform may send, to the electronic device, a message indicating that the Internet of Things device is under anomaly control, to notify the user that the Internet of Things device encounters an anomaly, and provide a solution for resolving the anomaly for the user. When the risk control module receives an anomaly response, a console of the Internet of Things cloud platform may display the anomaly response, to notify related management personnel that the Internet of Things cloud platform encounters an anomaly. Further, the related management personnel may process the anomaly of the Internet of Things cloud platform after receiving the prompt.

In this embodiment of this application, a status (an anomaly monitoring status 201 shown in FIG. 4) of the anomaly monitoring switch on the Internet of Things app on the electronic device 100 may be synchronized with a status of the anomaly monitoring switch 301 on the Internet of Things device 300.

The following describes a method for reporting a status of an anomaly monitoring switch by an Internet of Things device according to an embodiment of this application.

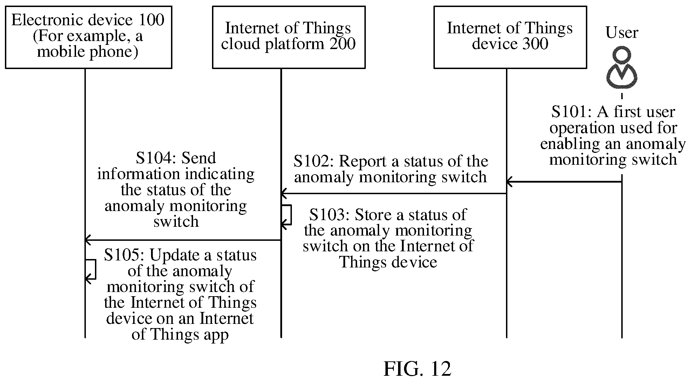

FIG. 12 shows a flowchart of a method for reporting a state of an anomaly monitoring switch by an Internet of Things device 300 as an example. The method may include steps S 101 to S105.

S101: The Internet of Things device 300 monitors a first user operation for enabling the anomaly monitoring switch 301.

In this embodiment of this application, when detecting that the status of the anomaly monitoring switch 301 changes, the Internet of Things device 300 may report a changed status of the anomaly monitoring switch 301 to the Internet of Things cloud platform 200.

For example, the anomaly monitoring switch 301 is disabled. When detecting a first user operation for enabling the anomaly monitoring switch 301, the Internet of Things device 300 may enable the anomaly monitoring switch 301. Further, the Internet of Things device 300 may report a status (that is, a turn-on state) of the anomaly monitoring switch 301 to the Internet of Things cloud platform 200. The first user operation may be a user operation performed on the anomaly monitoring switch 301 when the anomaly monitoring switch 301 shown in FIG. 3 is disabled. For example, a touch operation or a pressing operation.

In addition, the anomaly monitoring switch 301 is enabled. When detecting a user operation used to turn off the anomaly monitoring switch 301, the Internet of Things device 300 may turn off the anomaly monitoring switch 301. Further, the Internet of Things device 300 may report a status (that is, disabled) of the anomaly monitoring switch 301 to the Internet of Things cloud platform 200. The user operation for disabling the anomaly monitoring switch 301 may be a user operation performed on the anomaly monitoring switch 301 when the anomaly monitoring switch 301 shown in FIG. 3 is enabled. For example, a touch operation or a pressing operation.

A type of the anomaly monitoring switch 301 is not limited in this embodiment of this application. For example, the anomaly monitoring switch 301 may be another type of switch such as a capacitive switch or an inductive switch. In a possible implementation, when the status of the anomaly monitoring switch 301 changes from disabled to enabled, or changes from enabled to disabled, the Internet of Things device 300 may specifically perform a negation operation on a level on a pin corresponding to the anomaly monitoring switch 301.

S102: The Internet of Things device 300 reports a status of the anomaly monitoring switch 301 to the Internet of Things cloud platform 200.

S103: The Internet of Things cloud platform 200 stores a status of the anomaly monitoring switch 301 of the Internet of Things device 300.

In this embodiment of this application, the Internet of Things cloud platform 200 may store a field of abnormal monitor. The field of abnormal monitor corresponding to each Internet of Things device may indicate a status of anomaly monitoring of the Internet of Things device. If a value of an abnormal monitor field that is on the Internet of Things cloud platform 200 and that corresponds to the Internet of Things device 300 is 1, it may indicate that the anomaly monitoring switch 301 of the Internet of Things device 300 is enabled. If a value of an abnormal monitor field that is on the Internet of Things cloud platform 200 and that corresponds to the Internet of Things device 300 is 0, it may indicate that the anomaly monitoring switch 301 of the Internet of Things device 300 is disabled.

When receiving a status of the anomaly monitoring switch 301 reported by the Internet of Things device 300, the Internet of Things cloud platform 200 may store the foregoing status. That is, the Internet of Things cloud platform 200 may modify the abnormal monitor field corresponding to the Internet of Things device 300. For example, because the anomaly monitoring switch 301 changes from disabled to enabled, the Internet of Things cloud platform may change the value of the abnormal monitor field corresponding to the Internet of Things device 300 to 1.

S104: The Internet of Things cloud platform 200 sends information indicating a status of the anomaly monitoring switch 301 to the electronic device 100.

After receiving and saving the status of the anomaly monitoring switch 301 reported by the Internet of Things device 300, the Internet of Things cloud platform 200 may send, to the electronic device 100, information indicating a status of the anomaly monitoring switch 301. For example, information indicating that the anomaly monitoring switch 301 is enabled.

S105: The electronic device 100 updates a status of the anomaly monitoring switch of the Internet of Things device 300 in the Internet of Things app.

When receiving the status of the anomaly monitoring switch 301 of the Internet of Things device 300, the electronic device 100 may update the status of the anomaly monitoring switch 301 of the Internet of Things device 300 on the Internet of Things app. For example, when receiving information indicating that the anomaly monitoring switch 301 is enabled, the electronic device 100 may update the anomaly monitoring status 201 shown in FIG. 4 to disabled. The prompt in the anomaly monitoring status 201 may be updated to "ON". In this way, the user may view, from the Internet of Things app, that the anomaly monitoring switch 301 of the Internet of Things device 300 is enabled.

In a possible implementation, the electronic device 100 may send, to the Internet of Things cloud platform 200, a request used for obtaining a status of the anomaly monitoring switch 301. When receiving the foregoing request used to obtain the status of the anomaly monitoring switch 301, the Internet of Things cloud platform 200 may send the status of the anomaly monitoring switch 301 to the electronic device 100 based on the abnormal monitor field of the Internet of Things device 300. When receiving the status of the anomaly monitoring switch 301, the electronic device 100 may update the status of the anomaly monitoring switch 301 of the Internet of Things device 300 in the Internet of Things app. A time at which the electronic device 100 sends the request used to obtain the status of the anomaly monitoring switch 301 may be a time at which the electronic device 100 starts the Internet of Things app in response to a user operation. To be specific, when the Internet of Things app is started, the electronic device 100 may request the status of the anomaly monitoring switch 301 from the Internet of Things cloud platform 200, and update the status in the Internet of Things app. A time at which the electronic device 100 sends the request for obtaining the status of the anomaly monitoring switch 301 is not limited in this embodiment of this application.

In some embodiments, the Internet of Things device 300 may periodically report the status of the anomaly monitoring switch 301 to the Internet of Things cloud platform 200.

For example, in addition to the foregoing embodiment, when the status of the anomaly monitoring switch 301 changes, the Internet of Things device 300 may report the status of the anomaly monitoring switch 301 to the Internet of Things cloud platform 200. The Internet of Things device 300 may further report the status of the anomaly monitoring switch 301 to the Internet of Things cloud platform 200 once at intervals of a preset time period. The preset time period may be one day, two days, three days, or the like. A length of the preset time period is not limited in this embodiment of this application. For example, the Internet of Things device 300 may report the status of the anomaly monitoring switch 301 to the Internet of Things cloud platform 200 at a fixed time (for example, 23:00) every day.

In this way, it can be avoided that the status of the anomaly monitoring switch 301 on the Internet of Things device 300 is inconsistent with the status of the anomaly monitoring switch 301 stored on the Internet of Things cloud platform 200 in some abnormal situations. In addition, by setting the preset time period, a frequency of reporting the status of the anomaly monitoring switch 301 by the Internet of Things device 300 can be further reduced when it is ensured as much as possible that the status of the anomaly monitoring switch 301 on the Internet of Things device 300 is consistent with the status of the anomaly monitoring switch 301 stored on the Internet of Things cloud platform 200, thereby saving software and hardware resources of the Internet of Things device 300.

It can be learned from the method shown in FIG. 12 that the Internet of Things device 300 may include a physical anomaly monitoring switch 301. When the status of the anomaly monitoring switch 301 changes, data corresponding to the status of the anomaly monitoring switch 301 in both the Internet of Things cloud platform 200 and the electronic device 100 may change synchronously. To be specific, the user turns on or turns off the anomaly monitoring switch 301 on the Internet of Things device 300, and a value of the abnormal monitor field that is on the Internet of Things cloud platform 200 and that is used to indicate a state of the anomaly monitoring switch 301 may correspondingly change. In addition, the anomaly monitoring status 201 that is on the Internet of Things app in the electronic device 100 and that is used to indicate the status of the anomaly monitoring switch 301 may also correspondingly change. In this way, statuses of the anomaly monitoring switches 310 on three sides of the electronic device 100, the Internet of Things cloud platform 200, and the Internet of Things device 300 may be consistent.

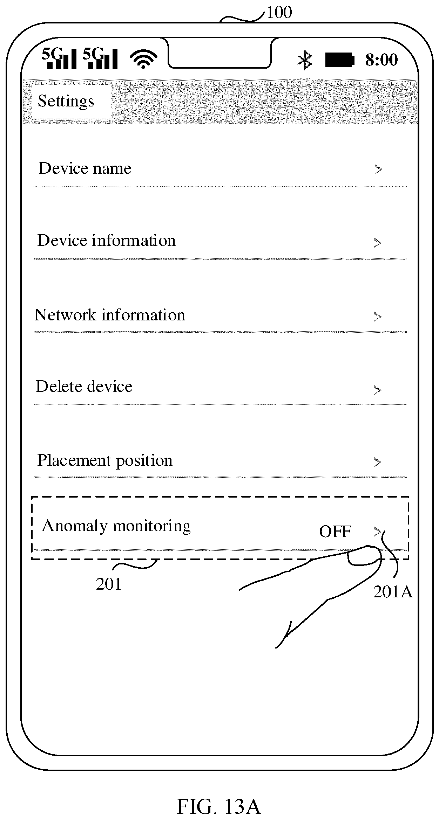

FIG. 13A to FIG. 13C shows schematic diagrams of a user interface for enabling an anomaly monitoring switch by using an Internet of Things app.

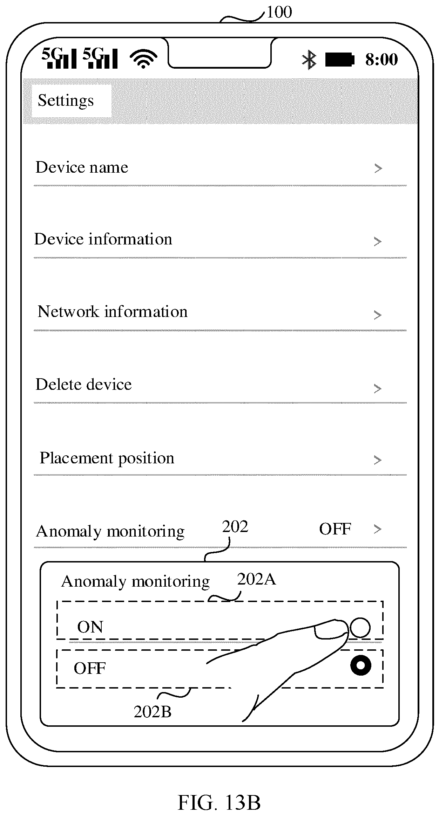

As shown in FIG. 13A, the Internet of Things app may include a setting interface used to perform related setting on the Internet of Things device 300. The setting interface may include an anomaly monitoring status 201. It can be learned from the prompt "OFF" in the anomaly monitoring status 201 that, the anomaly monitoring switch 301 on the Internet of Things device 300 is disabled. In response to a user operation performed on the anomaly monitoring switch 201A, the electronic device 100 may display a setting interface shown in FIG. 13B.

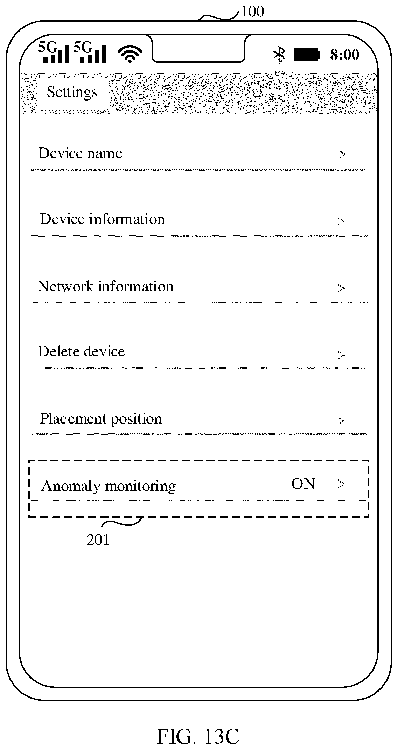

In FIG. 13B, the setting interface may include an option frame 202. The option frame 202 may be used by the user to change a status of the anomaly monitoring switch 301 on the Internet of Things device 300. The option frame 202 may include an on option 202A and an off option 202B. In response to a user operation performed on the on option 202A, the electronic device 100 may display a setting interface shown in FIG. 13C.

In FIG. 13C, a prompt of the anomaly monitoring status 201 on the setting interface may be changed to "ON". This may indicate that the anomaly monitoring switch 301 on the Internet of Things device 300 is enabled. In response to a user operation performed on the on option 202A, the electronic device 100 may further send, to the Internet of Things cloud platform 100, an instruction for enabling the anomaly monitoring switch 301 on the Internet of Things device 300. Further, the Internet of Things cloud platform 200 may send the foregoing instruction to the Internet of Things device 300. When receiving the instruction for enabling the anomaly monitoring switch 301 on the Internet of Things device 300, the Internet of Things device 300 may turn on the anomaly monitoring switch.

A process in which the electronic device 100 turns off the anomaly monitoring switch 301 on the Internet of Things device 300 by using the Internet of Things app may be the same as that in the foregoing embodiment.

In this way, the user can control the status of the anomaly monitoring switch 301 on the Internet of Things device 300 by using the Internet of Things app on the electronic device 100.

With reference to the foregoing schematic diagrams of user interfaces shown in FIG. 13A to FIG. 13C, the following describes a method for controlling a status of an anomaly monitoring switch on an Internet of Things device by an electronic device according to an embodiment of this application.

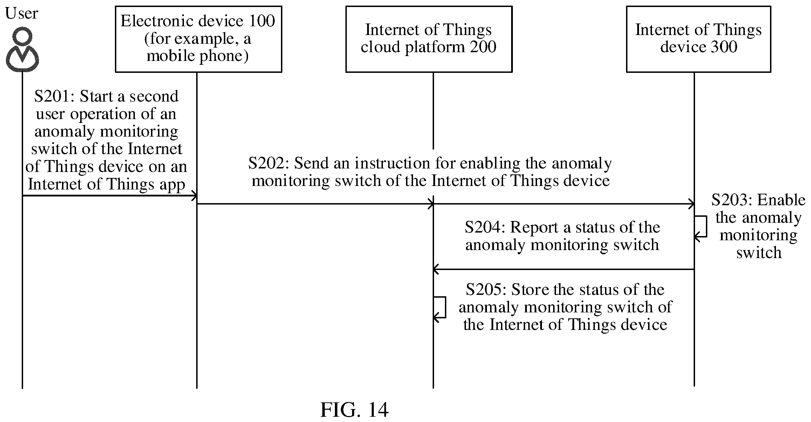

FIG. 14 shows a flowchart of a method for controlling a status of an anomaly monitoring switch on an Internet of Things device by an electronic device. The method may include steps S201 to S205.

S201: The electronic device 100 detects a second user operation for enabling the anomaly monitoring switch 301 of the Internet of Things device 300 in the Internet of Things app.

The anomaly monitoring switch 301 of the Internet of Things device 300 is disabled. Information that is on the electronic device 100 and the Internet of Things cloud platform 200 and that indicates a status of the anomaly monitoring switch 301 is information indicating disabled.

The user may turn on the anomaly monitoring switch 301 of the Internet of Things device 300 through a second user operation acting on the electronic device 100. The second user operation may be, for example, a touch operation performed on the on option 202A in FIG. 13B.

S202: The electronic device 100 sends, through the Internet of Things cloud platform 200, an instruction for enabling the anomaly monitoring switch 301 of the Internet of Things device 300 to the Internet of Things device 300.

Specifically, when detecting the second user operation, the electronic device 100 may send, to the Internet of Things cloud platform 200 by using a second interface of the Internet of Things cloud platform 200, an instruction for enabling the anomaly monitoring switch 301. Further, the Internet of Things cloud platform 200 may send, to the Internet of Things device 300 by using the first interface, the foregoing instruction for enabling the anomaly monitoring switch 301.

S203: The Internet of Things device 300 turns on the anomaly monitoring switch 301.

When receiving an instruction for enabling the anomaly monitoring switch 301, the Internet of Things device 300 may turn on the anomaly monitoring switch 301. Specifically, the Internet of Things device 300 may perform a negation operation on a level on a pin corresponding to the anomaly monitoring switch 301.

S204: The Internet of Things device 300 reports a status of the anomaly monitoring switch 301 to the Internet of Things cloud platform 200.

S205: The Internet of Things cloud platform 200 stores a status of the anomaly monitoring switch 301 of the Internet of Things device 300.

For implementation processes of step S204 and step S205, refer to step S102 and step S103 shown in FIG. 12. Details are not described herein again.

In a possible implementation, an anomaly monitoring function of the Internet of Things device 300 may be set to be turned on before delivery. Specifically, an erasable storage module of the Internet of Things device 300 stores an anomaly rule. When the Internet of Things device 300 sends a request or a status message to the Internet of Things cloud platform 200, the Internet of Things device 300 may determine, based on an anomaly rule, whether the request or the status message is an anomaly request or an abnormal status message. When the Internet of Things device 300 receives a control instruction sent by the Internet of Things cloud platform 200, the Internet of Things device 300 may determine, based on an anomaly rule, whether the control instruction is an abnormal control instruction. For a specific process of performing anomaly monitoring and a processing method after an anomaly is monitored, refer to the description of the foregoing embodiment. In other words, the anomaly monitoring switch 301 shown in FIG. 3 may not be disposed on the Internet of Things device 300.

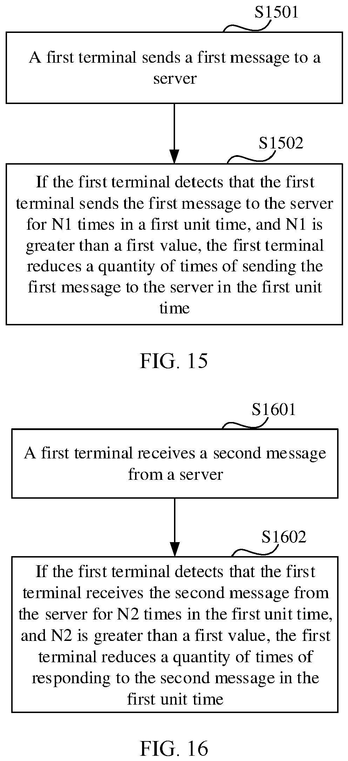

Referring to FIG. 15, FIG. 15 is a device anomaly monitoring method when an anomaly occurs on an Internet of Things device 300 according to an embodiment of this application. The method includes the following steps.

S1501: A first terminal sends a first message to a server.

The first terminal may be the Internet of Things device 300 in the foregoing embodiment. The server may be the Internet of Things cloud platform 200 in the foregoing embodiment. The first message may be a login request of the first terminal requests for logging in to the server, a status message of the first terminal reported by the first terminal to the server (for example, an on or off state of the first terminal, power consumption of the first terminal, or data collected by a sensor configured for the first terminal), or the like. Specific content of the first message is not limited in this embodiment of this application.

S1502: If the first terminal detects that the first terminal sends the first message to the server for N1 times in a first unit time, and N1 is greater than a first value, the first terminal reduces a quantity of times of sending the first message to the server in the first unit time.

The step S 1502 is described in detail below in which the first message is a login request.

The first terminal encounters an anomaly, frequently sends a login request to the server. For a reason why the first terminal encounters an anomaly, refer to the embodiments shown in FIG. 1A, FIG. 1B(1), and FIG. 1B(2).

The first terminal may store an anomaly rule used for performing anomaly monitoring. For example, the foregoing anomaly rule includes a first anomaly rule: If a frequency of sending a login request by the first terminal is higher than 30 times/minute, the behavior of sending the login request is an abnormal behavior. That is, if the first terminal detects that the quantity of times of sending the login request by the first terminal to the server within one minute is greater than 30, the first terminal may determine that the behavior of sending the login request is an abnormal behavior. The first unit time is 1 minute. The first value is 30. Neither the first unit time nor a specific value of the first value is specifically limited in this embodiment of this application. The foregoing anomaly rule may be preset when the first terminal is delivered from a factory.

If the first terminal detects that the quantity of times of sending the login request by the first terminal to the server within one minute is greater than 30, the first terminal may reduce the quantity of times of sending the login request to the server within one minute. That is, the first terminal may reduce a frequency of sending the login request to the server.

Specifically, the first terminal may record a time at which each time login request is sent. When the login request is sent for the n-th time, the first terminal may determine whether the quantity of times of sending the login request in one minute before a current moment exceeds 30. If the quantity of times exceeds 30, the first terminal may determine that the sending the login request for n-th time is an abnormal behavior. Further, the first terminal may discard the login request that needs to be sent the n-th time. In this way, the first terminal may reduce a frequency of sending the login request to the server, and control a quantity of times of sending the login request within 1 minute to be within 30. The foregoing device anomaly monitoring method can reduce waste of software and hardware resources of the first terminal and the server.

In some embodiments, the anomaly rule stored in the first terminal may be updated by the server.

The server contains a risk control module. The risk control module may be configured to monitor whether the first terminal encounters an anomaly. The risk control module may be further configured to generate the foregoing anomaly rule based on a current consumption status of software and hardware resources of the server. For a specific function of the risk control module, refer to the foregoing embodiment. Details are not described herein again.

If consumption of software and hardware resource of the server is higher, the risk control module may set a lower frequency in the anomaly rule when generating the anomaly rule. In this way, the first terminal may control, based on an updated anomaly rule, a frequency of sending the first message within a lower range, thereby better saving software and hardware resources of the first terminal and the server. For example, the risk control module may generate a second anomaly rule. The second anomaly rule may be: If a frequency of sending the login request by the first terminal is higher than 20 times/minute, a behavior of sending the login request is an abnormal behavior. The server may send the second anomaly to the first terminal. The first terminal may update the first anomaly rule to the second anomaly rule. Anomaly monitoring is performed by using the second anomaly rule. When detecting that sending the login request is an abnormal behavior, the first terminal may reduce a frequency of sending the login request to the server, and control a quantity of times of sending the login request within 1 minute to be within 20.

It can be learned from the foregoing embodiment that, an anomaly rule used for performing anomaly monitoring in the first terminal is not changeless. The foregoing anomaly rule may be adaptively updated based on consumption of software and hardware resources of the server. In this way, the software and hardware resources of the first terminal and the server can be properly used, and the software and hardware resources of the first terminal and the server can be better saved.

In some embodiments, if the first terminal detects that the first terminal sends the first message to the server for N1 times within the first unit time, and N1 is greater than the first value, a second terminal, that is, the electronic device 100 in the foregoing embodiment, may display content such as a message notification indicating that an anomaly occurs on the first terminal and a solution to the anomaly. In this way, the user may learn, by viewing the second terminal, that the first terminal is abnormal, and resolve the anomaly of the first terminal according to the foregoing solution.

In addition, if the first terminal detects an abnormal behavior, the first terminal may notify, by using voice broadcast or different display lights, the user that the first terminal encounters an anomaly. In this way, the user can know in time that the anomaly occurs in the first terminal, to resolve the anomaly of the first terminal according to a related solution.

In some embodiments, a physical anomaly monitoring switch may be disposed on the first terminal. For example, the anomaly monitoring switch 301 shown in FIG. 3. In response to a user operation performed on the anomaly monitoring switch 301, the first terminal may enable or disable the anomaly monitoring function. When the anomaly monitoring function is enabled, the first terminal may perform anomaly monitoring according to the anomaly monitoring method in the foregoing embodiment. The first terminal may further send, to the server, a state indicating whether the anomaly monitoring switch is enabled or disabled. The server may store the state of the anomaly monitoring switch. In this way, the second terminal may obtain the status of the anomaly monitoring switch by using the server.

According to the foregoing anomaly monitoring method, the first terminal (that is, the Internet of Things device 300) may detect whether an anomaly occurs on the first terminal. When detecting that the first terminal frequently sends the anomaly request to the server, the first terminal may reduce a frequency of sending the anomaly request to the server. In this way, by reducing processing of anomaly requests detected by the first terminal, the first terminal and the server can reduce a waste of software and hardware resources. In addition, the first terminal reduces a frequency of sending a detected anomaly request to the server, and does not directly stop sending the anomaly request, thereby reducing impact of misjudgment of an abnormal behavior on function implementation of the first terminal.

Referring to FIG. 16, FIG. 16 is a device anomaly monitoring method when an anomaly occurs on an Internet of Things cloud platform 200 according to an embodiment of this application. The method includes the following steps.

S 1601: A first terminal receives a second message from the server.

The second message may be a control instruction (for example, starting the first terminal or stopping the first terminal) for setting the state of the first terminal by the server, an instruction for acquiring the status message of the first terminal, or the like. Specific content of the second message is not limited in this embodiment of this application.

S1602: If the first terminal detects that the first terminal receives the second message from the server for N2 times in the first unit time, and N2 is greater than a first value, the first terminal reduces a quantity of times of responding to the second message in the first unit time.

The server encounters an anomaly, and frequently sends the second message to the first terminal. For a scenario in which the server encounters an anomaly, refer to the embodiment shown in FIG. 2.

The first terminal may store an anomaly rule used for performing anomaly detection. For example, the foregoing anomaly rule includes a third anomaly rule: If a frequency at which the first terminal receives the second message sent by the server is higher than 30 times/minute, a behavior of sending the second message by the server is an abnormal behavior. In other words, if the first terminal detects that the quantity of times of receiving the second message from the server within one minute is greater than 30, the first terminal may determine that the behavior of sending the second message by the server is an abnormal behavior. The first terminal is under anomaly control of the server. The first unit time is 1 minute. The second value is 30. Neither the first unit time nor a specific value of the second value is limited in this embodiment of this application.

If the first terminal detects that the quantity of times of receiving the second message from the server within one minute is greater than 30, the first terminal may reduce the quantity of times of responding to the second message within one minute. That is, the first terminal may reduce a frequency of responding to the second message.

Specifically, the first terminal may record a time at which the second message is received each time. When receiving the second message for the m-th time, the first terminal may determine whether a quantity of times of receiving the second message within one minute before the current moment exceeds 30. If more than 30, the first terminal may determine that the second message received for the m-th time is an abnormal control instruction. Further, the first terminal may discard the second message received for the m-th time, and skip responding. In this way, the first terminal may reduce a frequency of responding to the second message, and control a quantity of times of responding to the second message within 1 minute to be within 30. The foregoing device anomaly method can reduce a waste of software and hardware resources of the first terminal.

In some embodiments, the anomaly rule stored in the first terminal may be updated by the server.

The server contains a risk control module. The risk control module may be configured to generate an anomaly rule based on a current consumption status of software and hardware resources of the server.

For example, the risk control module may generate a fourth anomaly rule. The fourth anomaly rule may be: if the first terminal receives that a frequency of sending the second message by the server is higher than 20 times/minute, the behavior of sending the second message by the server is an abnormal behavior. The server may send the fourth anomaly rule to the first terminal. The first terminal may update the third anomaly rule to the fourth anomaly rule. Anomaly monitoring is performed by using the fourth anomaly rule. When detecting that the second message sent by the server is an abnormal behavior, the first terminal may reduce a frequency of responding to the second message, and control a quantity of times of responding to the second message in one minute to be within 20.

According to the foregoing anomaly monitoring method, the first terminal (that is, the Internet of Things device 300) may detect whether an anomaly occurs in the server. When detecting that the first terminal frequently receives anomaly control from the server, the first terminal may reduce a frequency of responding to the anomaly control from the server. In this way, by reducing a frequency of responding to the abnormal control instruction, the first terminal can reduce a waste of software and hardware resources.

According to the context, the term "when" used in the foregoing embodiments may be interpreted as a meaning of "if" or "after" or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or some of the procedures of the methods in embodiments may be implemented by a computer program instructing related hardware. The program may be stored in the computer-readable storage medium. When the program is executed, the procedures in the method embodiments may be included. The foregoing storage medium includes any medium that can store program code, such as a ROM, a random access memory RAM, a magnetic disk, or an optical disc.

## Claims

1. A device anomaly monitoring method, wherein the method comprises:
sending, by a first terminal, a first message to a server; and
if the first terminal detects that the first terminal sends the first message to the server for N1 times in a first unit time, and N1 is greater than a first value, reducing, by the first terminal, a quantity of times of sending the first message to the server in the first unit time, wherein N1 is a positive integer; or
receiving, by the first terminal, a second message from the server; and
if the first terminal detects that the first terminal receives the second message from the server for N2 times in the first unit time, and N2 is greater than a second value, reducing, by the first terminal, a quantity of times of responding to the second message in the first unit time, wherein N2 is a positive integer.

2. The method according to claim 1, wherein the first message comprises a login request and/or a status message of the first terminal; and the second message comprises indication information of a first task.

3. The method according to claim 2, wherein responding by the first terminal to the second message comprises: executing, by the first terminal, the first task based on the indication information of the first task, wherein the first task comprises setting a status of the first terminal and/or sending the status message of the first terminal to the server.

4. The method according to claim 3, wherein the setting a status of the first terminal comprises one or more of the following: turning on the first terminal and enabling the first terminal to play audio, turning off the first terminal, adjusting volume of the first terminal, switching the audio played by the first terminal, and pausing the audio played by the first terminal.

5. The method according to any one of claims 1 to 4, wherein the first value and the second value are preset by the first terminal; or
the first value and the second value are sent by the server to the first terminal.

6. The method according to any one of claims 1 to 4, wherein the first terminal stores a third value and a fourth value, the third value is used by the first terminal to detect whether the quantity of times of sending the first message by the first terminal to the server in the first unit time exceeds the third value, and the fourth value is used by the first terminal to detect whether a quantity of times of receiving the second message by the first terminal from the server in the first unit time exceeds the fourth value, wherein the third value and the fourth value are preset by the first terminal, or the third value and the fourth value are sent by the server to the first terminal; and
the method further comprises:
if the server detects that the server receives the first message from the first terminal for N1 times in the first unit time, and N1 is greater than the first value, receiving, by the first terminal, the first value from the server, and updating the third value to the first value, wherein the first value is generated by the server; or
if the server detects that the server sends the second message to the first terminal for N2 times in the first unit time, and N2 is greater than the second value, receiving, by the first terminal, the second value from the server, and updating the fourth value to the second value, wherein the second value is generated by the server.

7. The method according to any one of claims 1 to 6, wherein the method further comprises:
if the first terminal sends the first message to the server for N1 times in the first unit time, and N1 is greater than the first value, displaying a type of first terminal anomaly and/or a solution to the first terminal anomaly on a second terminal; or
if the first terminal receives the second message from the server for N2 times in the first unit time, and N2 is greater than the second value, displaying a type of anomaly control received by the first terminal and/or a solution to the anomaly control received by the first terminal on a second terminal; wherein
the second terminal is configured to set a status of the first terminal and obtain a status message of the first terminal by using the server, wherein the server stores an identifier of one or more terminals mapped to the second terminal, and the one or more terminals comprise the first terminal.

8. A device anomaly monitoring method, wherein the method comprises:
receiving, by a server, a first message from a first terminal; and
generating, by the server, a first value; and
if the server detects that the server receives the first message from the first terminal for N1 times in a first unit time, and N1 is greater than the first value, sending, by the server, the first value to the first terminal, wherein the first value is used by the first terminal to determine whether a quantity of times of sending the first message to the server in the first unit time exceeds the first value, and N1 is a positive integer; or
sending, by the server, a second message to the first terminal; and
generating, by the server, a second value; and
if the server detects that the server sends the second message to the first terminal for N2 times in the first unit time, and N2 is greater than the second value, sending, by the server, the second value to the first terminal, wherein the second value is used by the first terminal to determine whether a quantity of times of receiving the second message from the server in the first unit time exceeds the second value, and N2 is a positive integer.

9. The method according to claim 8, wherein the first message comprises a login request and/or a status message of the first terminal; and the second message comprises indication information of a first task.

10. The method according to claim 9, wherein the first task comprises setting a status of the first terminal and/or sending the status message of the first terminal to the server.

11. The method according to any one of claims 8 to 10, wherein the method further comprises:
receiving, by the server, the first message from the first terminal; and
generating, by the server, a third value, wherein the third value is less than the first value; and
if the server detects that the server receives the first message from the first terminal for N3 times in the first unit time, and N3 is greater than the third value, sending, by the server, the third value to the first terminal, wherein the third value is used to update the first value stored in the first terminal, and N3 is a positive integer; or
sending, by the server, the second message to the first terminal; and
generating, by the server, a fourth value, wherein the fourth value is less than the second value; and
if the server detects that the server sends the second message to the first terminal for N4 times in the first unit time and N4 is greater than the fourth value, sending, by the server, the fourth value to the first terminal, wherein the second value is used to update the second value stored in the first terminal, and N4 is a positive integer.

12. The method according to any one of claims 8 to 11, wherein the server stores an identifier of one or more terminals mapped to a second terminal, the one or more terminals comprise the first terminal, and the second terminal is configured to set the status of the first terminal and obtain the status message of the first terminal by using the server, and the method further comprises:
if the server detects that the server receives the first message from the first terminal for N1 times in the first unit time, and N1 is greater than the first value, sending, by the server, a third message to the second terminal; displaying indication content of the third message on the second terminal, wherein the indication content of the third message comprises a type of first terminal anomaly and/or a solution to the first terminal anomaly; or
if the server detects that the server sends the second message to the first terminal for N2 times in the first unit time, and N2 is greater than the first value, sending, by the server, a fourth message to the second terminal, and displaying indication content of the third message on the second terminal, wherein the indication content of the fourth message comprises a type of anomaly control received by the first terminal and/or a solution to the anomaly control received by the first terminal .

13. The method according to claim 11, wherein the server stores an identifier of one or more terminals mapped to a second terminal, the one or more terminals comprise the first terminal, and the second terminal is configured to set the status of the first terminal and obtain the status message of the first terminal by using the server, and the method further comprises:
if the server detects that the server receives the first message from the first terminal for N3 times in the first unit time, and N3 is greater than the third value, sending, by the server, the third message to the second terminal; and displaying indication content of the third message on the second terminal, wherein indication content of the third message comprises a type of first terminal anomaly and/or a solution to the first terminal anomaly; or
if the server detects that the server sends the second message to the first terminal for N4 times in the first unit time, and N4 is greater than the fourth value, sending, by the server, the fourth message to the second terminal, displaying indication content of the fourth message on the second terminal, wherein the indication content of the fourth message comprises a type of anomaly control received by the first terminal and/or a solution to the anomaly control received by the first terminal.

14. A terminal, comprising a communication module, a memory, and a processor, wherein
the communication module is configured to establish a communication connection to a server;
the memory is configured to store a computer program; and
the processor is configured to invoke the computer program, so that the terminal performs the method according to any one of claims 1 to 7.

15. A server, comprising a communication module, a memory, and a processor, wherein
the communication module is configured to establish a communication connection to a terminal;
the memory is configured to store a computer program; and
the processor is configured to invoke the computer program, so that the server performs the method according to any one of claims 8 to 13.

16. A computer-readable storage medium, comprising instructions, wherein when the instructions are run on the terminal, the terminal performs the method according to any one of claims 1 to 7.
